# EUROPÄISCHE PATENTSCHRIFT

(11) **EP 4 304 961 B1**
(45) Veröffentlichungstag und Bekanntmachung des Hinweises auf die Patenterteilung: **09.09.2026**
(21) Anmeldenummer: 21714395.7
(22) Anmeldetag: 09.03.2021
(51) Int. Cl.: B65G 57/18, B21D 43/28, H01R 43/28

(54) **KABELSTAPLER, KABELBEARBEITUNGSVORRICHTUNG MIT EINEM KABELSTAPLER UND VERFAHREN ZUM SICHEREN BEFÖRDERN EINES KABELS**
CABLE STACKER, CABLE-PROCESSING APPARATUS COMPRISING A CABLE STACKER, AND METHOD FOR SAFELY CONVEYING A CABLE
DISPOSITIF D'EMPILEMENT DE CÂBLES, APPAREIL DE TRAITEMENT DE CÂBLES COMPRENANT UN DISPOSITIF D'EMPILEMENT DE CÂBLES ET PROCÉDÉ POUR TRANSPORTER UN CÂBLE EN TOUTE SÉCURITÉ

(43) Veröffentlichungstag der Anmeldung: 17.01.2024
(73) Patentinhaber: Schleuniger AG, 3608 Thun (CH)
(72) Erfinder: KAMPMANN, Roland, Witten 58456 (DE); BÜGLER, Manuel, Essen 45127 (DE); BÖHM, Michael, 42499 Hückeswagen (DE)
(74) Vertreter: Zimmermann & Partner Patentanwälte mbB
(86) Internationale Anmeldenummer: PCT/IB2021/051953
(87) Internationale Veröffentlichungsnummer: WO 2022/189829

(56) Entgegenhaltungen:
- EP-A1- 3 648 270
- CH-A5- 690 947
- DE-A1- 102017 202 502
- US-A- 4 777 711
- US-B2- 10 766 708

## Beschreibung

Die Erfindung betrifft Kabelstapler, Kabelbearbeitungsvorrichtungen mit einem Kabelstapler und Verfahren zum sicheren Befördern eines Kabels gemäss den unabhängigen Patentansprüchen.

Kabelstapler sind typischerweise eigenständige Vorrichtungen und werden typischerweise an Kabelbearbeitungsvorrichtungen angeordnet. Derartige Kabelstapler weisen einen Bandförderer mit einer ersten Förderrolle und zumindest einer weiteren Förderrolle auf, wobei zumindest einer der beiden Förderrollen mit einer Förderantriebseinrichtung angetrieben wird. Auf den Förderrollen ist typischerweise ein Riemen angeordnet, welcher ein verarbeitetes Kabel entlang einer Förderbahn bewegt, wenn der Bandförderer aktiviert ist.

Die US 4,793,759 A offenbart einen Kabelstapler mit einem ersten Bandförderer zum Befördern des Kabels entlang einer Förderrichtung, wobei der erste Bandförderer eine Förderbahn mit einem Eingangsbahnabschnitt und einem Ausgangsbahnabschnitt aufweist. Es ist ein Hauptrahmen vorhanden, an dem der erste Bandförderer angeordnet ist, wobei eine Gegenbarriere zum Führen des Kabels vorhanden ist.

Nachteilig an dieser bekannten Lösung ist, dass bei einem Kabelbearbeitungsprozess mit einer hohen Produktionsfrequenz ein derartiger Mechanismus zum Abwerfen des Kabels von der Förderbahn fehlerhaft sind.

Die DE 10 2017 202 502 A1 betrifft einer Fördereinrichtung für Kabel, welche ein Transportband zum Fördern eines Kabelstücks umfasst. Die Fördereinrichtung umfasst ein Profilelement, welches quer zur Förderrichtung über das Transportband bewegbar ist, um das Kabelstück gesteuert vom Transportband in eine Auffangklappe zu befördern.

Nachteilig an dieser bekannten Lösung ist, dass bei einem Kabelbearbeitungsprozess mit einer hohen Produktionsfrequenz ein derartiger Mechanismus zum Abwerfen des Kabels vom Transportband zu langsam ist.

Aufgabe der vorliegenden Erfindung ist es einen verbesserten Kabelstapler bereit zu stellen, der insbesondere zumindest einen der vorhergenannten Nachteile nicht aufweist. Insbesondere wird ein Kabelstapler zu einem Hochleistungskabelstapler modifiziert, weil die Ablagegeschwindigkeit erhöht ist und Fehlablagen reduzierbar ist.

Die Aufgabe wird durch die Merkmale der unabhängigen Ansprüche gelöst. Vorteilhafte Weiterbildungen sind in den Figuren und in den abhängigen Patentansprüchen dargelegt.

Ein erfindungsgemässer Kabelstapler umfasst einen ersten Bandförderer zum Befördern des Kabels entlang einer Förderrichtung, wobei der erste Bandförderer zum Aufnehmen eines Riemens geeignet ist und der erste Bandförderer eine Förderbahn mit einem Eingangsbahnabschnitt und einem Ausgangsbahnabschnitt aufweist. Des Weiteren ist ein Hauptrahmen vorhanden, an dem der erste Bandförderer angeordnet ist, wobei eine Gegenbarriere zum Führen des Kabels vorhanden ist. Der erste Bandförderer weist im Bereich des Eingangsbahnabschnitts eine erste Abwurfbarriere zum Verhindern eines ungesteuerten Abgleitens des Kabels von der Förderbahn auf, wobei die erste Abwurfbarriere relativ zur Gegenbarriere zumindest von einer Aktivposition in eine Inaktivposition bewegbar ist.

Die erste Abwurfbarriere kann vertikal zur Gegenbarriere und/oder horizontal zur Gegenbarriere bewegt werden. Befindet sich die erste Abwurfbarriere in deren Aktivposition, so dient diese als Hindernis für das vorlaufende Kabelende eines Kabels. Eine Gegenbarriere ist neben dem Führen des Kabels auch geeignet, um ein ungesteuertes Abgleiten des Kabels von der Förderbahn zu verhindern. Das vorlaufende Kabelende kann im Beförderungsprozess entlang der Förderrichtung die Abwurfbarriere nicht überwinden, wenn sich die Abwurfbarriere in deren Aktivposition befindet. Ein ungesteuertes Abgleiten des Kabels von der Förderbahn ist so vermeidbar, sodass die Ablagegeschwindigkeit erhöht werden kann und gleichzeitig Fehlablagen reduzierbar sind. Beispielsweise ist die erste Abwurfbarriere benachbart zu einer ersten Förderrolle des Bandförderers angeordnet. Im Bereich des Ausgangsbahnabschnitt kann eine weitere Förderrolle angeordnet sein, welche aktiv von einer Förderantriebseinrichtung antreibbar bzw. bewegbar ist.

Die Gegenbarriere ist im Eingangsbahnabschnitt der Förderbahn angeordnet, sodass diese zumindest gegenüberliegend der ersten Abwurfbarriere am Kabelstapler angeordnet ist. Somit ist das Führen des Kabels weiter verbessert.

Vorzugsweise ist die erste Abwurfbarriere orthogonal zur Förderrichtung von der Aktivposition in eine Inaktivposition bewegbar. Dabei kann die erste Abwurfbarriere hin zur Förderbahn oder weg von der Förderbahn bewegt werden, beispielsweise gesenkt oder angehoben werden (vertikal). Die erste Abwurfbarriere kreuzt dabei die Förderbahn des Bandförderers nicht, sodass das verarbeitete Kabel ungehindert auf die Förderbahn förderbar ist.

Alternativ oder ergänzend ist die erste Abwurfbarriere entlang der Förderrichtung der Förderbahn bewegbar. Die erste Abwurfbarriere kann klein und kompakt gebaut sein. Je nach Kabellänge und/oder Kabelart kann die erste Abwurfbarriere entlang der Förderrichtung der Förderbahn am Kabelstapler positioniert werden.

Bevorzugterweise ist die erste Abwurfbarriere mit einer Antriebseinrichtung mit zumindest einem Antrieb zum Bewegen der ersten Abwurfbarriere mechanisch verbunden. Der Antrieb kann als Elektroantrieb ausgeführt sein, sodass die erste Abwurfbarriere einfach bewegbar ist.

Bevorzugt ist die Antriebseinrichtung eine pneumatische Antriebseinrichtung, welche als Antrieb zumindest einen Pneumatikzylinder aufweist. Damit ist die erste Abwurfbarriere einfach von der Aktivposition in die Inaktivposition überführbar.

Bevorzugt weist diese Antriebseinrichtung ein Ventil auf. Das Ventil kann als Druckluftventil ausgeführt sein und beispielsweise Bestandteil einer Ventilbatterie sein. Mit einem Ventil sind die elektrischen Steuersignale einfach in Druckluftniveaus umwandelbar, was eine gesteuerte Druckluftversorgung des Pneumatikzylinders gewährleistet.

Vorzugsweise ist eine Steuerungseinrichtung vorhanden, welche zumindest mit der Antriebseinrichtung zum Austausch von Steuerdaten elektrisch verbunden ist. Damit lässt sich die Antriebseinrichtung reproduzierbar steuern. Beispielsweise weist die Steuereinrichtung eine Recheneinheit auf und ist mit einem Speicher und/oder einer Datenbank zum Austausch von Steuerdaten verbunden.

Bevorzugterweise ist eine Sensoreinrichtung vorhanden, mit der zumindest die Inaktivposition der ersten Abwurfbarriere detektierbar ist.

Die Sensoreinrichtung erkennt die Inaktivposition der ersten Abwurfbarriere und leitet entsprechende Sensordaten an die Steuereinrichtung weiter. Die Sensordaten können in der Recheneinheit der Steuereinrichtung weiterverarbeitet werden. Alternativ oder ergänzend ist eine Sensoreinrichtung vorhanden, mit der zumindest die Aktivposition der ersten Abwurfbarriere detektierbar ist. Die Sensoreinrichtung erkennt die Aktivposition der ersten Abwurfbarriere und leitet entsprechende Sensordaten an die Steuereinrichtung weiter. Die Sensordaten können in der Recheneinheit der Steuereinrichtung zu Steuerbefehlen zumindest für die erste Abwurfbarriere weiterverarbeitet werden. Dafür ist diese Sensoreinrichtung mit der Steuerungseinrichtung zum Austausch von Sensordaten elektrisch verbunden.

Bevorzugterweise ist die Gegenbarriere bewegbar am ersten Bandförderer angeordnet. Die Gegenbarriere kann per Hand von einem Benutzer bewegt werden, oder mit einem Einstellmechanismus verbunden sein, der die Gegenbarriere motorisch oder pneumatisch bewegt. Damit lässt sich beispielsweise ein Spalt zwischen der Gegenbarriere und der Förderbahn einstellen, insbesondere wenn ein neuer Riemen am ersten Bandförderer angeordnet wurde, sodass ein Einklemmen des verarbeiteten Kabels am Bandförderer verhinderbar ist.

Vorzugsweise ist der erste Bandförderer relativ zur Horizontalen verkippt am Hauptrahmen angeordnet. Der erste Bandförderer ist dabei um die Förderrichtung verdreht bzw. verkippt, sodass das Abgleiten des Kabels von der Förderbahn erschwert ist. Insbesondere ist die Verkippung zwischen 1 Grad und 15 Grad. Bevorzugt beträgt die Verkippung 6 Grad. Damit ist ein frühzeitiges Ableiten des Kabels verhinderbar bzw. das gewünschte gesteuerte Abgleiten des Kabels von der Förderbahn noch möglich.

Bevorzugterweise ist ein Auffangbereich zum Auffangen der Kabel vorhanden, wobei die erste Abwurfbarriere benachbart zum Auffangbereich angeordnet ist. Diejenigen verarbeiteten Kabeln, welche erste Abwurfbarriere überwinden sollen, sind sicher im Auffangbereich lagerbar.

Bevorzugt ist der Auffangbereich als bewegbare Auffangwanne ausgeführt. Die Auffangwanne kann einfach mit einem Pneumatikzylinder gekippt werden, beispielsweise von einer Endlage (hochgekippt) in eine weitere Endlage (heruntergekippt) bewegt werden. Beispielsweise kann auch eine Endlagerwanne vorhanden sein, um die verarbeiteten Kabel zu lagern, wenn diese von der heruntergekippten Auffangwanne in die Endlagerwanne befördert werden.

Vorzugsweise ist am ersten Bandförderer ein Riemen zum Transportieren des Kabels entlang der Förderrichtung angeordnet. Ein Riemen ist einfach und reproduzierbar an den Bandförderer positionierbar und mithilfe einer Spanneinrichtung fixierbar.

Bevorzugt ist der Riemen ein Flachbandriemen. Ein Flachbandriemen weist kein Längsprofil (bzw. keinen Riemenwulst) auf und ist verglichen mit einem Riemen mit Längsprofil einfach aufgebaut und billig herstellbar. Insbesondere weist der Flachbandriemen an dessen der Laufseite gegenüberliegenden Tragseite bzw. dessen Aussenflächen eine Struktur mit einer erhöhten Adhäsion auf, sodass die bearbeiteten Kabel besser förderbar sind. Die Laufseite eines Flachbandriemens steht typischerweise mit zumindest einer Förderrolle in Wirkverbindung. Alternativ kann der Riemen ein Zahnriemen sein.

Bevorzugterweise ist entlang der Förderrichtung des ersten Bandförderers eine bewegbare Schutzabdeckung angeordnet. Die Schutzabdeckung kann aus dem Eingangsbahnabschnitt des ersten Bandförderers entfernt werden, um einen Benutzer einen einfachen Zugang zur Förderbahn zu ermöglichen.

Insbesondere ist die Schutzabdeckung schwenkbar. Dafür kann die Schutzabdeckung mithilfe eines Scharniers und mit einem Einrast- und/oder Federmechanismus mit integrierten Dämpfer-Elementen (z.B. Gasdruckfedern) mit dem Hauptrahmen verbunden, wobei das DämpferElement die aufgeklappte Position fixiert und/oder den Kraftaufwand beim Aufklappen verringert bzw. gleichmässiger über die Gesamtbewegung verteilt.

Vorzugsweise weist der erste Bandförderer zumindest eine zweite Abwurfbarriere zum Verhindern eines ungesteuerten Abgleitens des Kabels von der Förderbahn auf, wobei die zweite Abwurfbarriere relativ zur Gegenbarriere in eine Aktivposition bewegbar ist. Die zweite Abwurfbarriere kann benachbart zur ersten Abwurfbarriere angeordnet sein, um das ungesteuerte Abgleiten des Kabels verbessert zu verhindern.

Bevorzugterweise ist zumindest eine Fixiereinrichtung zum Fixieren zumindest der ersten Abwurfbarriere in der Aktivposition vorhanden. Die Fixiereinrichtung umfasst beispielsweise eine eigenständige mechanische, elektrische oder magnetische Fixiereinheit, welche das Überführen der ersten Abwurfbarriere in deren Inaktivposition verhindert, indem es entweder deren Antriebseinrichtung blockiert oder die Bewegung der erste Abwurfbarriere blockiert. Als Fixiereinrichtung kann auch die bewegbare Auffangwanne dienen, welche das Überführen der ersten Abwurfbarriere in deren Inaktivposition verhindert, wenn diese beispielsweise hockgekippt ist.

Vorzugsweise umfasst der erste Bandförderer mehrere Modulrahmen, welche mit dem Hauptrahmen verbindbar sind und somit stabil und ortsfest an dem Kabelförderer halten. Derartige Modulrahmen sind in standardisierten Baugrössen herstellbar, sodass die Förderbahn des ersten Bandförderers individuell anpassbar bzw. verlängerbar ist. Der Kabelstapler mit modularem Aufbau umfasst weiterhin nur einen Riemen, eine Spanneinrichtung und zumindest einen Riemenantrieb, sodass die Herstellkosten nicht nennenswert erhöht sind, jedoch der Kundennutzen erheblich verbessert ist, auf zusätzliche Förderrollen kann verzichtet werden.

Insbesondere sind die Modulrahmen voneinander und/oder vom Hauptrahmen separierbar, sodass die Modularität verbessert ist und der Transport und die Montage vor der Erst-Inbetriebnahme des Kabelstaplers vereinfacht ist.

Bevorzugterweise ist zumindest ein weiterer, vom ersten Bandförderer separierbarer, Bandförderer zum Befördern des Kabels entlang der Förderrichtung vorhanden, wobei der erste Bandförderer und der weitere Bandförderer zum Aufnehmen eines einzigen Riemens geeignet sind, sodass die Herstellkosten nicht nennenswert erhöht sind.

Bevorzugt ist ein einziger Flachbandriemen zum Transportieren des Kabels entlang der Förderrichtung vorhanden. Flachbandriemen sind einfach und reproduzierbar montierbar.

Vorzugsweise ist an einem der Modulrahmen und/oder an einem der weiteren Bandförderer eine weitere Abwurfbarriere zum Verhindern eines ungesteuerten Abgleitens des Kabels von der Förderbahn vorhanden, wobei die weitere Abwurfbarriere relativ zur Gegenbarriere zumindest in eine Aktivposition bewegbar ist. Damit kann ein ungesteuertes Abgleiten des Kabels von der Förderbahn ausserhalb des Eingangsbahnabschnitts verhindert werden.

Bevorzugterweise ist zumindest eine Abwurfeinrichtung zum Abwerfen des Kabels von zumindest einem der Bandförderer vorhanden, wobei die Abwurfeinrichtung mit der Steuerungseinrichtung zum Austausch von Steuerdaten elektrisch verbunden ist. Die Abwurfeinrichtung kann als Schwenkarm oder linearbewegbarer Abwurfarm ausgebildet sein, sodass ein gesteuertes Abwerfen ermöglicht wird und die Abwurfeinrichtung platzsparend am Kabelstapler angeordnet ist.

Die Kabelbearbeitungsvorrichtung nach Anspruch 13 umfasst zumindest eine Kabelbearbeitungsstation mit zumindest einem Kabelbearbeitungswerkzeug zum Bearbeiten des Kabels sowie einen wie hier vorliegend beschriebenen Kabelstapler und zumindest eine Abwurfeinrichtung zum Abwerfen des Kabels vom zumindest einem Bandförderer, der an der Kabelbearbeitungsvorrichtung oder an dem Kabelstapler angeordnet ist. Die zumindest eine Abwurfeinrichtung kann somit Teil der Kabelbearbeitungsvorrichtung oder Teil des Kabelstaplers sein. Beispielsweise wird ein an der Kabelbearbeitungsstation angeordneter Greifer als Abwurfeinrichtung eingesetzt und ist für den Kabeltransport zwischen verschiedenen Bearbeitungsstationen und/oder für weitere Funktionen einsetzbar. Beispielsweise ist der Greifer an einem Schwenkarm mit vertikaler Drehachse angeordnet.

Bevorzugt ist die Abwurfeinrichtung mit der Steuerungseinrichtung des Kabelstaplers zum Austausch von Steuerdaten verbunden. Damit lässt sich die zumindest eine Auswurfeinrichtung unabhängig von der Kabelbearbeitungsvorrichtung installieren bzw. in Betrieb nehmen.

Alternativ dazu ist der Kabelstapler mit einer Zentralsteuerung der Kabelbearbeitungsvorrichtung zum Austausch von Steuerdaten elektrisch verbunden, wobei die zumindest eine Abwurfeinrichtung mit der Zentralsteuerung zum Austausch von Steuerdaten verbunden ist. Auf eine separate Steuereinrichtung für den Kabelstapler kann verzichtet werden, sodass die Herstellungskosten des Kabelstapler optimiert sind.

Das erfindungsgemäße Verfahren zum sicheren Befördern eines Kabels an einem wie hier vorliegend beschriebenen Kabelstapler, umfasst zumindest die folgenden Schritte:
a) Auswählen zumindest eines Kabelparameters;
b) Überführen der ersten Abwurfbarriere relativ zu einer Gegenbarriere in eine Aktivposition;
c) Befördern des Kabels am ersten Bandförderer.

Ein ungesteuertes Abgleiten des Kabels von der Förderbahn des Bandförderers ist vermeidbar, sodass die Ablagegeschwindigkeit erhöht werden kann und gleichzeitig Fehlablagen reduziert sind.

Als Kabelparameter sind hier vorliegend der Kabeltyp (Koaxialkabel, Vielleiterkabel, usw.), die Kabelgeometrie (Aufbau, Dimensionierung, Kabellänge usw.) wie auch der Gesamtaufbau des verarbeiteten Kabels zu verstehen, wobei der Gesamtaufbau auch einen am Kabel angeordneten Kabelstecker umfassen kann. Insbesondere ist der Kabelstapler ein hier vorliegend beschriebener Kabelstapler oder einem Kabelstapler als Teil einer Kabelbearbeitungsvorrichtung wie zuvor beschrieben.

Vorzugsweise wird der zumindest eine Kabelparameter von einer Datenbank abgerufen. Die Steuereinrichtung oder die Zentralsteuerung sind mit der Datenbank zum Austausch von Kabelparametern verbunden, sodass auf bereit hinterlegte Kabelparameter zurückgegriffen werden kann und die Initialisierung des Kabelstaplers vor einem Produktionsbeginn verbessert ist.

Bevorzugterweise wird nach dem Schritt b) zumindest ein Kabelbearbeitungswerkzeug einer Kabelbearbeitungsstation aktiviert. Die Bearbeitung des Kabels kann somit erst gestartet werden, wenn sich die erste Abwurfbarriere in deren Aktivposition befindet, sodass die Fehlablage am Kabelstapler weiter verringert wird. Insbesondere wird das Kabelbearbeitungswerkzeug der Kabelbearbeitungsstation der hier vorliegend beschriebenen Kabelbearbeitungsvorrichtung aktiviert.

Vorzugsweise erfolgt nach dem Schritt c) der Schritt des Überführens der ersten Abwurfbarriere in eine Inaktivposition (Schritt d). Alternativ oder ergänzend erfolgt nach dem Schritt d) der Abwurf des Kabels mit der Abwurfeinrichtung (Schritt e)). Damit wird das Kabel zuverlässig abgeworfen, ohne an der Abwurfbarriere hängen zu bleiben. Ein weiterer Kabelstapler, der nicht Teil der vorliegenden Erfindung ist, umfasst einen ersten Bandförderer zum Befördern des Kabels entlang einer Förderrichtung, wobei der erste Bandförderer zum Aufnehmen eines Riemens geeignet ist. Des Weiteren ist ein Hauptrahmen vorhanden, an dem der erste Bandförderer angeordnet ist, wobei zumindest ein erstes Leitelement vorhanden ist. Das erste Leitelement ist entlang der Förderrichtung des zu beförderten Kabels positionierbar. Mithilfe des ersten Leitelements wird beim Abwurf des Kabels dessen Führung im Eingangsbahnabschnitt verbessert und so für eine optimale Ablagequalität gesorgt. Beim Abwerfen des Kabels bildet sich, beispielsweise ausgelöst von einer Schwenkbewegung einer Abwurfeinrichtung, ausgehend vom nachlaufenden Kabelendes eine horizontale Schlangenbewegung bis zum vorlaufenden Kabelende aus.

Die geometrische Form, beispielsweise eine gedämpfte Schwingung, der Schlangenbewegung wird durch den Abwurfimpuls der Abwurfeinrichtung auf das Kabel und der Position des ersten Leitelements vorgegeben, sodass ein ungewünschtes Abgleiten des Kabels verhindert wird. Die Position des ersten Leitelements ist je nach Kabellänge bzw. Kabelparameter einzustellen, wobei die Position des ersten Leitelements bei kurzen Kabeln unterschiedlich zur Position des ersten Leitelements für lange Kabel ist und insbesondere die Position des ersten Leitelements bei dünnen Kabeln unterschiedlich zur Position des ersten Leitelements für dicke Kabel ist.

Im Bereich des ersten Leitelements ist eine Sensoreinrichtung mit zumindest einem Sensor zum Bestimmen einer ersten Position des Leitelements vorhanden, wobei die Sensoreinrichtung mit der Steuerungseinrichtung oder mit der Zentralsteuerung einer Kabelbearbeitungsvorrichtung elektrisch verbunden ist. Mithilfe des Sensors lässt sich ein Positionierungsfehler des ersten Leitelements relativ zum beförderten Kabel detektieren, sodass ein ungewünschtes Abgleiten des Kabels verbessert verhindert wird.

Alternativ oder ergänzend ist eine Antriebseinrichtung für die Bewegung des Leitelements mit dem erste Leitelement verbunden. Die Antriebseinrichtung ermöglicht ein präzises und reproduzierbares Positionieren des ersten Leitelements am Kabelstapler, insbesondere abhängig vom zu stapelnden Kabel. Die Antriebseinrichtung umfasst dafür bevorzugt eine Spindel oder einen Pneumatikzylinder, wobei die Spindel eine stufenlose Positionierung des ersten Leitelements ermöglicht und ein Pneumatikzylinder eine kostengünstige Variante einer Antriebseinrichtung ist.

Als Sensor kann beispielsweise eine Lichtschranke, ein induktiver oder magnetische Sensor oder ein Schalter verwendet werden, der die erste Position des ersten Leitelements detektiert und mit einem Detektionselement zusammenwirken kann. Alternativ kann die Antriebseinrichtung den Sensor umfassen, indem beispielsweise eine Position eines Pneumatikzylinders oder die Drehbewegung einer Spindel erfasst wird. Die Steuereinrichtung oder die Zentralsteuerung umfassen eine Recheneinheit und ist mit einer Datenbank zum Austausch von Steuerdaten verbunden. Die Steuerdaten umfassen Steuerbefehle zum Steuern der Antriebseinrichtung des ersten Leitelements. Die Recheneinheit weist ein Programm auf, welches geeignet ist, um die Sensordaten auszuwerten und, beispielsweise mit einem vorausgewählten Kabelparameter des zu stapelnden Kabels, zu überprüfen bzw. zu vergleichen sowie die erste Position zu berechnen und mit einem Referenzwert aus einer Datenbank zu vergleichen. Ist beispielsweise die erste Position des ersten Leitelements unterschiedlich zum Referenzwert, so wird zumindest eine Warnung ausgesendet und gegebenenfalls wird ein Förderbetrieb des Bandförderers unterbunden oder verzögert. Ansonsten kann der erste Bandförderer mit dem Fördern des verarbeiteten bzw. zu stapelnden Kabels starten.

Vorzugsweise ist die Antriebseinrichtung für die Bewegung des Leitelements mit der Steuerungseinrichtung elektrisch verbunden, sodass das Positionieren präzise gesteuert ausführbar ist, und insbesondere für kurze Kabel, lange Kabel, dicke Kabel oder dünne Kabel einstellbar ist.

Alternativ dazu ist die Antriebseinrichtung mit einer Zentralsteuerung einer Kabelbearbeitungsvorrichtung elektrisch verbunden. Damit können Steuerbefehle zum Bewegen des ersten Leitelements direkt von der Zentralsteuerung einer Kabelbearbeitungsvorrichtung erstellt und übermittelt werden und gegebenenfalls der erste Bandförderer gestoppt werden. Die Antriebseinrichtung kann einen pneumatischen Antrieb umfassen oder auch einen elektrischen Antrieb umfassen. Bevorzugterweise ist eine Schutzabdeckung vorhanden und das erste Leitelement an der Schutzabdeckung angeordnet. Damit ist das erste Leitelement zusammen mit der Schutzabdeckung gemeinsam entfernbar, sodass eine verbesserte Zugänglichkeit zum Förderband für den Benutzer möglich ist. Die Schutzabdeckung ist beispielsweise eine wie zuvor beschriebene Schutzabdeckung.

Insbesondere ist diese Schutzabdeckung beweglich, bevorzugt kippbar, ausgeführt und enthält Fixier-, Dämpfer- und/oder Feder-Elemente. Diese fixieren die aufgeklappte Position der Schutzabdeckung und/oder verringern den Kraftaufwand beim Aufklappen und/oder verteilen den Kraftaufwand gleichmässig über die Gesamtbewegung. Damit wird der Bedienkomfort für den Benutzer verbessert.

Ein Verfahren zum sicheren Befördern eines Kabels an einem wie hier vorliegend beschriebenen Kabelstapler, das nicht Teil der vorliegenden Erfindung ist, umfasst das die folgenden Schritte:
a) Überführen des ersten Leitelements in eine erste Position, wobei die erste Position mit der Kabellänge des zu befördernden Kabels abgestimmt ist;
b) Überprüfen der ersten Position des ersten Leitelements mithilfe der Sensoreinrichtung;
c) Übergabe von Steuerdaten an die Steuerungseinrichtung;
d) Befördern des Kabels am ersten Bandförderer.

Dies führt zu einer Reduktion der Fehlablagen im Kabelstapler. Wird Schritt b) von einem Benutzer per Hand ausgeführt, erkennt die Überprüfung in Schritt c), dass die mit der Sensoreinrichtung gemessene Position nicht mit der erforderlichen Position übereinstimmt. Dies für zum Stillstand des Bandförderers und der Benutzer kann eine Warnung/Fehlermeldung erhalten.

Insbesondere erfolgt vor dem Schritt a) das Auswählen zumindest eines Kabelparameters des Kabels. Als Kabelparameter sind hier vorliegend der Kabeltyp (Koaxialkabel, Vielleiterkabel, usw.), die Kabelgeometrie (Aufbau, Dimensionierung, Kabellänge usw.) wie auch der Gesamtaufbau des verarbeiteten Kabels gemeint, wobei der Gesamtaufbau auch einen am Kabel angeordneten Kabelstecker umfassen kann. Insbesondere ist der Kabelstapler ein hier vorliegend beschriebener Kabelstapler oder einem Kabelstapler als Teil einer Kabelbearbeitungsvorrichtung wie zuvor beschrieben.

Vorzugsweise wird der zumindest eine Kabelparameter von einer Datenbank abgerufen. Die Steuereinrichtung oder die Zentralsteuerung sind mit der Datenbank zum Austausch von Kabelparametern verbunden, sodass auf bereit hinterlegte Kabelparameter zurückgegriffen werden kann und die Initialisierung des Kabelstaplers vor einem Produktionsbeginn verbessert ist.

Vorzugsweise erfolgt das Überführen des ersten Leitelements in die erste Position in Schritt b) mithilfe der Antriebseinrichtung. Damit lässt sich das erste Leitelement vollautomatisch einstellen.

Der erfindungsgemäße Kabelstapler umfasst einen ersten Bandförderer zum Befördern des Kabels entlang einer Förderrichtung, wobei der erste Bandförderer zum Aufnehmen eines Riemens geeignet ist. Des Weiteren ist ein Hauptrahmen vorhanden, an dem der erste Bandförderer angeordnet ist, wobei eine Gegenbarriere zum Führen des Kabels vorhanden ist. Die Gegenbarriere ist relativ zur Förderrichtung bewegbar, um einen Spalt zu der Förderbahn des ersten Bandförderers einzustellen.

Mithilfe der bewegbaren Gegenbarriere lässt sich ein Spalt zwischen dem Riemen und der Gegenbarriere einstellen, wenn der Riemen am ersten Bandförderer angeordnet ist, sodass ein unerwünschtes Klemmen des verarbeiteten Kabels in diesem Spalt verhindern lässt. Dies führt zu einer Reduktion der Fehlablagen im Kabelstapler.

Vorzugsweise ist die Gegenbarriere normal zur Förderrichtung bewegbar, um einen horizontalen Spalt zwischen dem ersten Bandförderer und der Gegenbarriere vertikal einzustellen. Damit ist ein unerwünschtes Klemmen des verarbeiteten Kabels im horizontalen Spalt verhinderbar.

Alternativ oder ergänzend ist die Gegenbarriere normal zur Förderrichtung bewegbar, um einen vertikalen Spalt zwischen dem ersten Bandförderer und der Gegenbarriere horizontal einzustellen. Damit ist ein unerwünschtes Klemmen des verarbeiteten Kabels im vertikalen Spalt verhinderbar.

Bevorzugterweise ist der Riemen als Flachbandriemen ausgeführt. Ein Flachbandriemen weist zumindest eine Riementransportfläche und zumindest eine Riemenstirnfläche auf. Ein Flachbandriemen weist kein Längsprofil auf und ist verglichen mit einem Riemen mit einem Längsprofil einfach aufgebaut und billig herstellbar. Derartige Flachbandriemen werden von einem Benutzer per Hand ausgetauscht. Ein Riemen mit Längsprofil weist zumindest einen stufenartigen Vorsprung auf, an dem die Riemenstirnfläche angeordnet ist.

Vorzugsweise ist die Gegenbarriere normal zur Riementransportfläche bewegbar, um einen horizontalen Spalt zwischen dem Riemen und der Gegenbarriere vertikal einzustellen. Damit ist ein unerwünschtes Klemmen des verarbeiteten Kabels im horizontalen Spalt verhinderbar.

Alternativ oder ergänzend ist die Gegenbarriere normal zur Riemenstirnfläche bewegbar, um einen vertikalen Spalt zwischen dem Riemen und der Gegenbarriere horizontal einzustellen. Damit ist ein unerwünschtes Klemmen des verarbeiteten Kabels im vertikalen Spalt verhinderbar.

Die Gegenbarriere ist bevorzugt im Eingangsbahnabschnitt der Förderbahn angeordnet, sodass diese gegenüberliegend dem Auffangbereich am Kabelstapler angeordnet ist. Somit ist das Führen des Kabels weiter verbessert. Insbesondere erstreckt sich die Gegenbarriere entlang der Förderbahn des Bandförderers.

Bevorzugterweise ist an der Gegenbarriere ein Einstellmechanismus zum Bewegen der Gegenbarriere angeordnet, sodass die Gegenbarriere einfach relativ zum Bandförderer einstellbar ist.

Alternativ dazu ist die Gegenbarriere mit einem Einstellmechanismus zum Bewegen der Gegenbarriere mechanisch verbunden. Der Einstellmechanismus kann einen Spindelantrieb aufweisen, an dem die erste Gegenbarriere einfach und stufenlos einstellbar ist.

Bevorzugt ist dieser Einstellmechanismus so ausgeführt, dass dieser Einstellmechanismus im Förderbetrieb des ersten Bandförderers nicht verstellbar ist. Damit kann ein unerwünschtes Verstellen der Gegenbarriere im Betrieb verhindert werden. Der Einstellmechanismus kann dafür selbsthemmend ausgebildet sein.

Vorzugsweise umfasst der Einstellmechanismus ein Langloch und eine Befestigungseinrichtung. Beispielsweise ist der Einstellmechanismus mithilfe zumindest einer Schraube oder einem Bolzen und mit einer Unterlegscheibe im Bereich dieses Langlochs mit dem Hauptrahmen des Kabelstaplers verbunden. Die Unterlegscheibe ist so ausgestaltet, dass sich die Schraube bei Vibrationen nicht lockert, beispielsweise als Rippenscheibe oder als Keilsicherungsscheibe (Nord-Lock). Pro Einstellmechanismus sind mehrere Schrauben oder Bolzen, Unterlegscheiben und Langlöcher vorgesehen. Wird die Befestigungseinrichtung vom Benutzer leicht gelockert, dann ist der Einstellmechanismus und die daran befestigte Gegenbarriere frei bewegbar. Sobald die Schrauben oder der Bolzen fixiert ist, ist die Gegenbarriere relativ zum Hauptrahmen fixiert und eindeutig positioniert.

Alternativ oder ergänzend dazu kann der Einstellmechanismus beispielsweise eine Spindel oder eine Schraube mit hoher Steigung aufweisen und/oder ein Fixierelement aufweisen, wie beispielsweise eine Kontermutter. Eine Gegenbarriere mit einem derartigen Einstellmechanismus lässt sich auch von einem ungeschulten Benutzer mit einfachen Werkzeugen, wie beispielsweise einem Drehmomenten-Schlüssel einfach einstellen. Sobald die Schrauben oder der Bolzen fixiert ist, ist die Gegenbarriere relativ zum Hauptrahmen fixiert und eindeutig positioniert.

Bevorzugterweise umfasst der Einstellmechanismus eine Einstellhilfe, sodass der gewünschte Spalt zwischen dem Bandförderer bzw. dem Riemen und der Gegenfläche reproduzierbar einstellbar ist. Die Einstellhilfe kann in den Spalt geschoben werden, motorisch oder per Hand vom Benutzer. Anschliessend wird die Gegenbarriere hin zur Einstellhilfe geschoben, bis sich Gegenbarriere, Einstellhilfe und Bandförderer bzw. Riemen jeweils gegenseitig berühren. Vor der Inbetriebnahme wird nun noch die Einstellhilfe aus dem Spalt herausgezogen bzw. entfernt. Somit kann jederzeit und mit wenig Aufwand ein reproduzierbarer Spalt in optimaler Grösse für Riemen verschiedener Hersteller erzeugt werden. Bei starker Abnutzung des Riemens (Dicken-Reduktion durch Verschleiss/Abrieb) kann der Einstell-Prozess auch mehrmals beim selben Riemen wiederholt werden. Vorzugsweise erstreckt sich die Gegenbarriere entlang der Förderbahn des ersten Bandförderers, sodass ein verbessertes Führen eines Kabels am Bandförderer über eine längere Förderstrecke gewährleistet ist.

Ein Verfahren zum Einstellen eines Spalts an einem Kabelstapler, insbesondere an einem wie zuvor beschriebenen Kabelstapler, das nicht Teil der vorliegenden Erfindung ist, umfasst zumindest die folgenden Schritte:
a) Anordnen eines Riemens an einem Bandförderer,
b) Überführen einer Gegenbarriere von einer ersten Position in eine weitere Position, um einen Spalt zwischen dem Riemen und der Gegenbarriere einzustellen.

Mithilfe der bewegbaren Gegenbarriere lässt sich ein Spalt zwischen dem Riemen und der Gegenbarriere einfach einstellen, wenn der Riemen am ersten Bandförderer angeordnet ist, sodass ein unerwünschtes Klemmen des verarbeiteten Kabels in diesem Spalt verhindert wird. Dies führt zu einer Reduktion der Fehlablagen im Kabelstapler und zu einer erhöhten Betriebssicherheit.

Vorzugsweise wird vor dem Schritt b) eine Einstellhilfe zwischen der Gegenbarriere und dem Riemen angeordnet. Somit kann jederzeit und mit wenig Aufwand ein reproduzierbarer Spalt in optimaler Grösse für Riemen verschiedener Hersteller erzeugt werden. Bei starker Abnutzung des Riemens (Dicken-Reduktion durch Verschleiss/Abrieb) kann der Einstell-Prozess auch mehrmals beim selben Riemen wiederholt werden.

Bevorzugterweise wird nach dem Schritt b) die Einstellhilfe zwischen der Gegenbarriere und dem Riemen entfernt, um ein unerwünschtes Klemmen des verarbeiteten Kabels mit der Einstellhilfe zu verhindern.

Vorzugsweisse hängt die weitere Position der Gegenbarriere von zumindest einem Kabelparameter, insbesondere vom Kabeldurchmesser, ab. Als Kabelparameter sind hier vorliegend der Kabeltyp (Koaxialkabel, Vielleiterkabel, usw.), die Kabelgeometrie (Aufbau, Dimensionierung, Kabellänge usw.) wie auch der Gesamtaufbau des verarbeiteten Kabels zu verstehen, wobei der Gesamtaufbau auch einen am Kabel angeordneten Kabelstecker umfassen kann.

Insbesondere ist der Einstellmechanismus mit einer Steuerungseinrichtung zum Austausch von Steuerdaten verbunden. Ein derartiger Einstellmechanismus umfasst eine Antriebseinrichtung mit einem Antrieb zum Bewegen der Gegenbarriere, der reproduzierbar, beispielsweise abhängig vom Kabelparameter von der Steuereinrichtung steuerbar ist.

Insbesondere ist eine Sensoreinrichtung vorhanden, mit welcher der Spalt zwischen einem Förderbandriemen und der Gegenbarriere erkennbar ist. Die Sensoreinrichtung umfasst beispielsweise einen Abstandssensor zum Detektieren des Abstands zwischen dem Riemen und der ersten Gegenbarriere und sendet die Sensordaten an die Steuerungseinrichtung. Die Steuerungseinrichtung umfasst eine Recheneinheit und ist mit einer Datenbank zum Austausch von Steuerdaten verbunden. Die Steuerdaten umfassen Steuerbefehle zum Steuern der Antriebseinrichtung der Gegenbarriere und/oder Steuerbefehle zum Steuern der Förderrollen des Bandförderers. Die Recheneinheit weist ein Programm auf, welches geeignet ist, um die Sensordaten auszuwerten und eine Spaltbreite zu berechnen und mit einem Referenzwert zu vergleichen. Ist die Spaltbreite zu gross für das zu verarbeitende Kabel, so wird zumindest eine Warnung ausgesendet und gegebenenfalls wird ein Förderbetrieb des Bandförderers unterbunden oder verzögert. Insbesondere ist die Sensoreinrichtung ausgebildet, die Spaltbreite direkt zu messen. Beispielsweise umfasst die Sensoreinrichtung einen bildgebenden Sensor, wie eine Kamera.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung beschrieben sind.

Die Bezugszeichenliste ist wie auch der technische Inhalt der Patentansprüche und Figuren Bestandteil der Offenbarung. Die Figuren und Ausführungsformen werden zusammenhängend und übergreifend beschrieben. Gleiche Bezugszeichen bedeuten gleiche Bauteile, Bezugszeichen mit unterschiedlichen Indices geben funktionsgleiche oder ähnliche Bauteile an. Aufzählungen wie erste, zweite, ... weitere dienen lediglich zur Unterscheidung von Bauteilen.

Es zeigen dabei:
- Fig. 1: eine erste Ausführungsform einer Kabelbearbeitungsvorrichtung mit einem erfindungsgemässen Kabelstapler, in einer schematischen Aufsicht (XY-Ebene),
- Fig. 2: Kabelbearbeitungsvorrichtung gemäss Fig. 1 mit in einer schematischen Seitenansicht (XZ-Ebene),
- Fig. 3: der Kabelstapler gemäss Fig. 2 in einer Schnittansicht, entsprechend der in Fig. 2 eingezeichneten Schnittebene (A-A),
- Fig. 4: der Kabelstapler gemäss Fig. 3, als isometrische Schnittansicht, mit ausgeblendeter Schutzabdeckung und heruntergeklappter Auffangwanne,
- Fig. 5a: die Abwurfbarriereeinrichtung des Kabelstaplers gemäss Fig. 4 mit der ersten Abwurfbarriere in der Aktivposition in einer Seitenansicht,
- Fig. 5b: die Abwurfbarriereeinrichtung des Kabelstaplers gemäss Fig. 4 mit der ersten Abwurfbarriere in der in der Inaktivposition, in einer Seitenansicht,
- Fig. 6a: eine alternative Ausführungsform einer Abwurfbarriere für den Kabelstapler gemäss Fig. 4 mit der ersten Abwurfbarriere in der Aktivposition, in einer Seitenansicht,
- Fig. 6b: die Abwurfbarriereeinrichtung des Kabelstaplers gemäss Fig. 6a mit der ersten Abwurfbarriere in der in der Inaktivposition, in einer Seitenansicht,
- Fig. 7a: eine alternative Ausführungsform eines Kabelstaplers gemäss Fig. 4 in modularer Bauweise, in einer Seitenansicht
- Fig. 7b: eine weitere alternative Ausführungsform eines Kabelstaplers gemäss Fig. 4 mit mehreren Bandförderern und mehreren Abwurfbarrieren, in einer Seitenansicht,
- Fig. 8a: eine alternative Ausführungsform eines Kabelstaplers für eine Kabelbearbeitungsvorrichtung gemäss Fig. 1, mit einer modifizierten Gegenbarriere, mit einem Riemen mit Längsprofil, in einer Schnittansicht (Y-Z Ebene),
- Fig. 8b: eine weiter Ausführungsform eines Kabelstaplers für eine Kabelbearbeitungsvorrichtung gemäss Fig. 1, mit einer modifizierten Gegenbarriere, mit einem Flachbandriemen, in einer Schnittansicht (Y-Z Ebene),
- Fig. 9a: eine weitere Ausführungsform eines Kabelstaplers für eine Kabelbearbeitungsvorrichtung gemäss Fig. 1, mit der Gegenbarriere in einer ersten Position, in einer Schnittansicht (Y-Z Ebene),
- Fig. 9b: den Kabelstapler gemäss Fig. 9a, mit der Gegenbarriere in einer zweiten Position, in einer Schnittansicht (Y-Z Ebene),
- Fig. 9c: den Kabelstapler gemäss Fig. 9a, mit der Gegenbarriere in einer dritten Position, in einer Schnittansicht (Y-Z Ebene),
- Fig. 10a: eine alternative Ausführungsform eines Kabelstaplers für eine Kabelbearbeitungsvorrichtung gemäss Fig. 1, mit einem erweiterten Leitelement in einer ersten Position, in einer Schnittansicht (Y-Z Ebene), und
- Fig. 10b: den Kabelstapler gemäss Fig. 10a, mit dem erweiterten Leitelement in einer zweiten Position, in einer Schnittansicht (Y-Z Ebene).

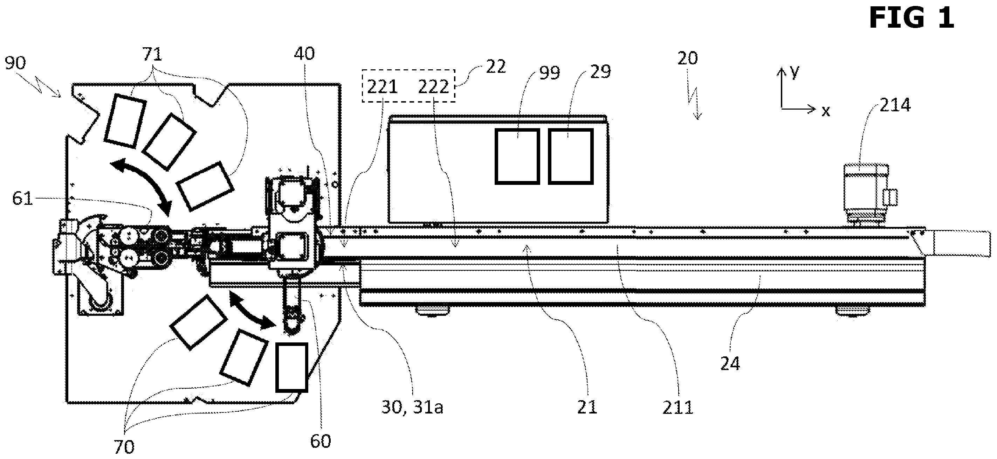

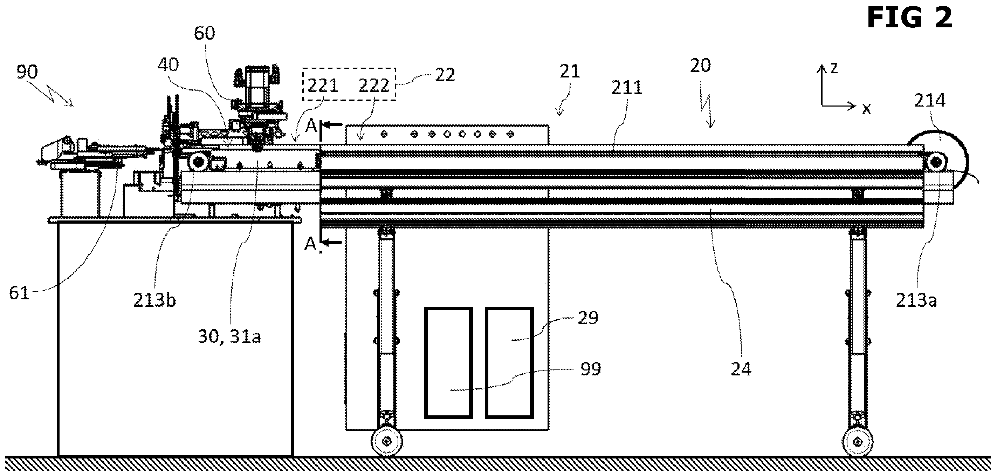

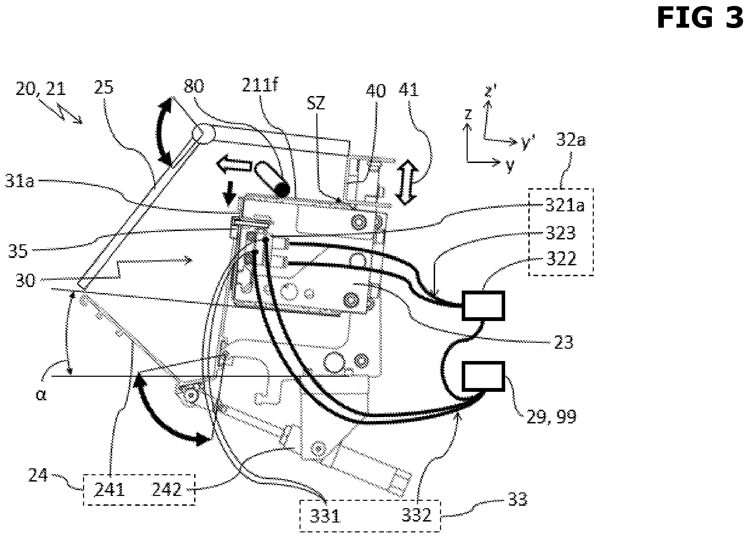

Fig. 1 und Fig. 2 zeigen eine erste Ausführungsform einer Kabelbearbeitungsvorrichtung 90 mit einem erfindungsgemässen Kabelstapler 20, in einer Aufsicht (XY-Ebene, Fig. 1) und in einer Seitenansicht (XZ-Ebene, Fig. 2). Für eine bessere Sicht auf die inneren Funktionselemente des Kabelstaplers 20 ist die Schutzabdeckung 25 (sichtbar in Fig. 3) ausgeblendet. Die Kabelbearbeitungsstationen 70, 71 sowie die Steuerungseinrichtungen 29, 99 sind nur schematisch dargestellt; auch Schläuche, Steuerkabel und andere für die Erfindung nebensächliche Details sind nicht dargestellt.

Die Kabelbearbeitungsvorrichtung 90 ist als Schwenkarmmaschine ausgeführt und besteht aus zwei Schwenkarmen 60, 61 welche die beiden Enden des Kabels 80 (nicht dargestellt) zu den jeweiligen Kabelbearbeitungsstationen 70, 71 bewegen bzw. schwenken. Nach erfolgter Bearbeitung in den Kabelbearbeitungsstationen 70, 71 wird das Kabel 80 in den Kabelstapler 20 überführt. Dieser besteht aus einem ersten Bandförderer 21, welcher das Kabel 80 entlang der Förderrichtung X fördert. Der erste Bandförderer 21 umfasst einen Riemen 211, zwei dazu passenden Förderrollen bzw. Umlenkrollen 213a, 213b und einer Antriebseinrichtung 214 zur aktiven Drehung einer der beiden Umlenkrolle 213a. Die Antriebseinrichtung 214 weist einen Elektromotor, beispielsweise mit integriertem Getriebe, als Antrieb auf. Die Förderbahn 22 des Kabelstaplers 20 umfasst einen Eingangsbahnabschnitt 221 und einen Ausgangsbahnabschnitt 222. Im Eingangsbahnabschnitt 221 wird das Kabel 80 durch die Abwurfeinrichtung 60 abgeworfen, wobei in dieser Ausführungsform ein Schwenkarm der Kabelbearbeitungsvorrichtung 90 die Funktion dieser Abwurfeinrichtung 60 übernimmt.

Alternativ dazu kann die Abwurfeinrichtung 60 auch eine eigenständige Baugruppe sein, welche am Kabelstapler 20 angeordnet ist. Dies ist sinnvoll und notwendig bei alternativen Kabelbearbeitungsvorrichtungen (nicht dargestellt), ausgeführt beispielsweise als Transfer- oder Rundtaktmaschine.

Die abgeworfenen Kabel 80 fallen in den Auffangbereich 24, welcher typischerweise eine kippbare Auffangwanne 241 (Fig. 3) umfasst.

Um zu verhindern, dass Kabel 80 ungewollt und/oder frühzeitig von dem ersten Bandförderer 21 fallen, ist zumindest im Eingangsbereich 221 eine Abwurfbarriereeinrichtung 30 mit einer ersten Abwurfbarriere 31a und mit einer ersten Gegenbarriere 40 vorgesehen. Die erste Abwurfbarriere 31a dient zum Verhindern eines ungesteuerten Abgleitens des Kabels 80 von der Förderbahn 22, wobei die erste Abwurfbarriere 31a relativ zur Gegenbarriere 40a bewegbar ist. Die Abwurfbarriereeinrichtung 30 ist im Bereich der Umlenkrolle 213b angeordnet, die sich passiv mit dem Riemen 211 mitbewegt.

Zur Steuerung aller Sensoren und Antriebselemente des Kabelstaplers 20 sind diese mit einer Steuerungseinrichtung 29 elektrisch verbunden. Diese Steuerungseinrichtung 29 ist Teil des Kabelstaplers 20 und ist wiederum verbunden mit einer Zentralsteuerung 99 der Kabelbearbeitungsvorrichtung 90.

Alternativ dazu kann auf die lokale Steuerungseinrichtung 29 im Kabelstapler 20 verzichtet werden. Hierzu sind die Steuerungskabel aller Sensoren und Antriebselemente des Kabelstaplers 20 direkt elektrisch verbunden mit der Zentralsteuerung 99 der Kabelbearbeitungsvorrichtung 90.

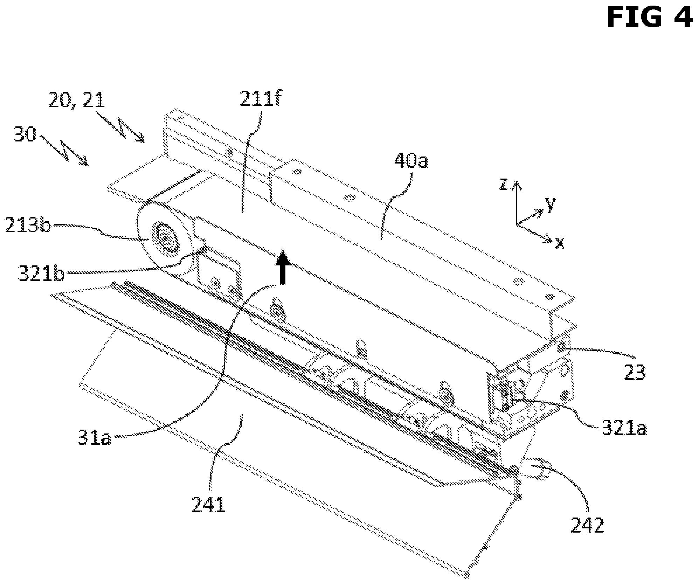

Fig. 3 zeigt den Kabelstapler 20 aus Fig. 2 in einer Schnittansicht, entlang der Schnittebene (A-A), mit dem bearbeiteten Kabel 80 und einer Schutzabdeckung 25 schematisch dargestellt, wobei sich die erste Abwurfbarriere 31a in der Inaktivposition bzw. Passivposition (unten) befindet und die Auffangwanne 241 hochgeklappt dargestellt ist, sodass ein abgeworfenes Kabel 80 in der Auffangwanne 241 lagerbar ist. Fig. 4 zeigt den Kabelstapler 20 in einer isometrischen Schnittansicht, wobei die Schutzabdeckung 25 und das Kabel 80 ausgeblendet sind, jedoch mit der ersten Abwurfbarriere 31a in der Aktivposition (oben) und der Auffangwanne 241 heruntergeklappt.

Die erste Abwurfbarriere 31a wird durch eine Antriebseinrichtung 32a bewegt. Diese Antriebseinrichtung 32a besteht aus zwei Pneumatikzylindern 321a, 321b (nur sichtbar in Fig. 4), welche über Schläuche 323 mit einer Ventilbatterie 322 verbunden sind (schematisch dargestellt in Fig. 3). Diese Ventilbatterie 322 ist wiederum mithilfe der Steuerkabel 332 mit der Steuereinrichtung 29, 99 elektrisch verbunden. Um die beiden Endpositionen der Pneumatikzylinder 321a, 321b und damit das Erreichen der Aktiv- und der Inaktivposition der Abwurfbarriere 31a zuverlässig zu detektieren, ist eine Sensoreinrichtung 33 vorhanden. Diese besteht typischerweise aus zwei Sensoren 331 pro Pneumatikzylinder 321a (schematisch dargestellt in Fig. 3) und den dazu gehörenden Steuerkabeln 332, welche auch die Sensoren 331 mit der Steuereinrichtung 29, 99 elektrisch verbinden. Diese Sensoren 331 sind als magnetische Näherungsschalter ausgeführt und werden in dafür vorgesehenen Nuten der Pneumatikzylinder 321a, 321b befestigt. Um Kosten zu sparen kann alternativ kann auch nur ein Sensor 331 pro Pneumatikzylinder 321a, 321b verwendet werden, welcher entweder die Aktiv- oder die Inaktivposition der Abwurfbarriere 31a erkennt.

Um ein unerwünschtes Herunterfallen des Kabels 80 vom Bandförderer 21 zu verhindern, ist dieser gegenüber dem Hauptrahmen 23 und der Horizontalen Y verkippt, um den Verkippungswinkel α, welcher hier 6° beträgt. Das verkippte Koordinatensystem ist durch die Buchstaben Y' und Z' gekennzeichnet und gegenüber dem normalen Koordinatensystem Y, Z (horizontal, vertikal) um die X-Achse mit dem Verkippungswinkel α verkippt.

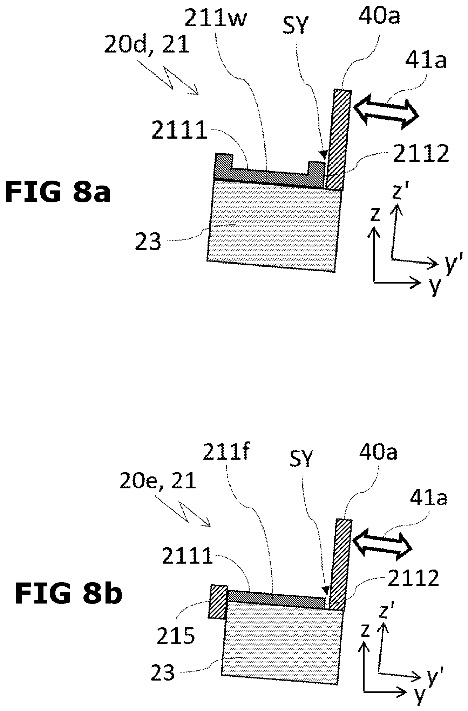

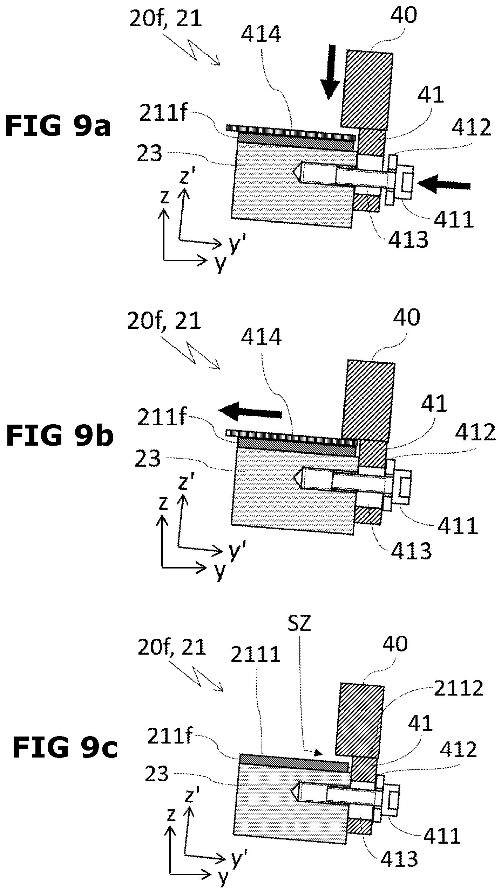

Um das Kabel 80 auch an der gegenüberliegenden Seite am Herunterfallen zu hindern, dient die Gegenbarriere 40. Der als Flachbandriemen 211f ausgeführte Riemen 211 überlappt hierbei die Gegenbarriere 40 in seiner Breiten-Richtung Y' und der Spalt SZ zwischen Flachbandriemen 211f und Gegenbarriere 40 ist in Z'-Richtung. Dadurch kann auf eine Seitenführung des Flachbandriemen 211f verzichtet werden (wie in Fig. 8b) und die Breite des Flachbandriemens 211f muss nicht besonders genau toleriert sein. Auch kann ein einfacher und kostengünstiger Flachbandriemen 211f verwendet werden anstelle eines teuren Riemens mit Längsprofil 211w (wie in Fig. 8a). Um den Spalt SZ möglichst klein einzustellen und somit ein Verklemmen der Kabel 80 in diesem Spalt SZ zu verhindern, kann die Gegenbarriere 40 über einen Einstellmechanismus 41 (schematisch dargestellt als Blockpfeil, Details in Fig. 9a und Fig. 9b) normal zum Flachbandriemen 211f (d.h. in Z'-Richtung) präzise, einfach und reproduzierbar eingestellt werden. So können Flachbandriemen 211f in unterschiedliche Dicken verwendet werden, was eine günstige Beschaffung dieser Flachbandriemen 211f ermöglicht. Auch kann der Wechsel eines nur teilweise verschlissenen Flachbandriemens 211f (mit verringerter Dicke aufgrund von Abrieberscheinungen) zeitlich noch etwas weiter herausgezögert werden durch Nachtstellen des Spalts SZ mithilfe des Einstellmechanismus 41.

In einen alternativen Kabelstapler nicht Teil der Erfindung (Fig. 9a, Fig. 9b) kann die hier beschriebene Gegenbarriere 40 mit dem dazu gehörenden Einstellmechanismus 41 auch ohne die Kombination mit einer Abwurfbarriere 31 bzw. Abwurfbarriereeinrichtung 30 eingesetzt werden.

Der Flachbandriemen 211f weist insbesondere eine spezielle Oberflächenbeschaffenheit auf, welche in Förderrichtung X einen besonders hohen Reibkoeffizient zum Kabel 80 ermöglicht. Weiterhin ist die Oberflächenbeschaffenheit des Flachbandriemens 211f so ausgestaltet, um einerseits den Verschleiss möglichst gering zu halten und somit eine lange Lebensdauer zu ermöglichen und andererseits das Kabel 80 möglichst schonend zu berühren, um dort keine Beschädigungen zu verursachen.

Die Kabel 80 werden beim Abwurf in Richtung zum Auffangbereich 24 bewegt (Blockpfeil) und fallen dann in den Auffangbereich 24, in dem die kippbare Auffangwanne 241 angeordnet ist. Das Kippen erfolgt mithilfe eines Antriebs 242, hier ausgeführt als Pneumatikzylinder, und wiederum mit Schläuchen, Sensoren und Steuerkabeln (nicht dargestellt) mit der Ventilbatterie 322 und der Steuerungseinrichtung 29, 99 verbunden. Unter der kippbaren Auffangwanne 241 liegt typischerweise noch eine weitere Wanne (nicht dargestellt) zum Entnehmen der Kabel durch den Benutzer.

Die kippbare Auffangwanne 241 weist eine Fixiereinrichtung 35 auf. Die Fixiereinrichtung 35 fixiert die erste Abwurfbarriere 31a in ihrer Inaktivposition.

Alternativ dazu (nicht dargestellt) kann eine derartige Fixiereinrichtung auch so ausgestaltet sein, dass sie die erste Abwurfbarriere 31a in der Aktivposition (oben) fixiert. In einer erweiterten Ausführungsform (nicht dargestellt) kann die Fixiereinrichtung auch so ausgestaltet sein, dass die Bewegung der Auffangwanne 241 an die Bewegung der Abwurfbarriere 31a mechanisch gekoppelt ist und deshalb nur ein Antrieb für beide Bewegungen notwendig ist, d.h. die Antriebseinrichtung 32a kann entfallen und/oder durch ein einfaches, passives Kraftelement (z.B. eine Feder) ersetzt werden.

Um die Sicherheit für den Benutzer zu verbessern und um ein Herausschiessen des Kabels 80 über den Auffangbereich 24 hinaus zu verhindern, ist eine Schutzabdeckung 25 vorgesehen (schematisch dargestellt). Die Schutzabdeckung 25 beinhaltet typischerweise transparente Bereiche, um dem Benutzer auch im geschlossenen Zustand die optische Betrachtung des Prozesses zu ermöglichen und kann zu Servicezwecken nach oben geklappt werden. Dafür ist die Schutzabdeckung 25 mithilfe eines Scharniers und mit einem Einrast- und/oder Federmechanismus mit integrierten Dämpfer-Elementen (z.B. Gasdruckfedern, nicht dargestellt), welcher die aufgeklappte Position fixiert und/oder den Kraftaufwand beim Aufklappen verringert bzw. gleichmässiger über die Gesamtbewegung verteilt. Bevorzugterweise ist die Schutzabdeckung 25 mit dem Hauptrahmen 23 verbunden. Um die Ablagequalität weiter zu verbessern, ist in dieser Schutzabdeckung 25 vorzugsweise noch ein Leitelement 50 integriert (Fig. 9).

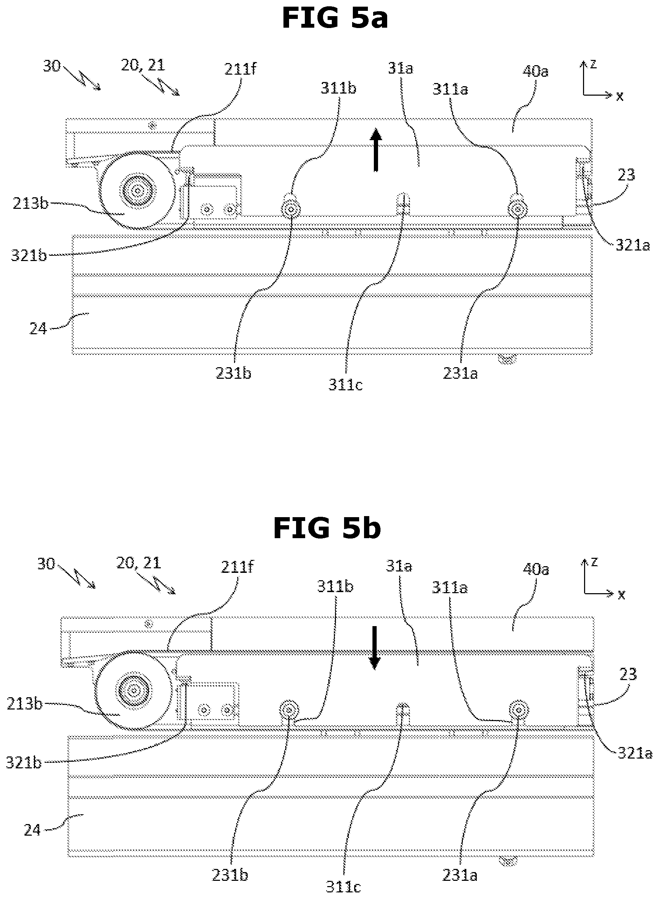

Fig. 5a und Fig. 5b zeigen die Elemente des Kabelstaplers 20 links der Schnittebene A-A (Fig. 2), d.h. wie in Fig. 3 und 4, in einer detaillierten Seitenansicht (XZ-Ebene). In beiden Figuren sind das bearbeitete Kabel 80 und die Schutzabdeckung 25 nicht dargestellt und die Auffangwanne 241 heruntergeklappt (wie in Fig. 3). In Fig. 5a befindet sich die ersten Abwurfbarriere 31a in der Aktivposition (oben); und in Fig. 5b befindet sich die ersten Abwurfbarriere 31a in der Inaktivposition (unten, Fig. 5b). Die ersten Abwurfbarriere 31a ist ein Langblech, welches orthogonal zur Förderrichtung X von der Aktivposition in eine Inaktivposition bewegbar ist (dargestellt durch dicke Pfeile in Z-Richtung). An der ersten Abwurfbarriere 31a sind jeweils an den beiden gegenüberliegenden Enden die Pneumatikzylinder 321a, 321b angeordnet, welche mit dem Hauptrahmen 23 verbunden sind und die gesamte ersten Abwurfbarriere 31a gleichmässig bewegen. An der ersten Abwurfbarriere 31a sind Führungsnuten 311a, 311b, 311c angeordnet, durch welche sich Führungsvorsätze 231a, 231b erstrecken.

Das Verfahren zum sicheren Befördern eines Kabels 80 am Kabelstapler wird am Beispiel des Kabelstaplers 20 gemäss den Fig. 1 bis 5b dargestellt umfasst zumindest die folgenden Schritte:
a) Auswählen zumindest eines Kabelparameters, welcher bevorzugt von einer Datenbank abgerufen wird;
b) Überführen der ersten Abwurfbarriere 31a relativ zu einer Gegenbarriere 40 in eine Aktivposition;
c) Befördern des Kabels 80 am ersten Bandförderer 21.

Die Steuereinrichtung 29 oder die Zentralsteuerung 99 sind mit der Datenbank zum Austausch von Kabelparametern verbunden, sodass auf bereits hinterlegte Kabelparameter zurückgegriffen werden kann.

Nach dem Schritt c) wird zumindest ein Kabelbearbeitungswerkzeug einer Kabelbearbeitungsstation 70 für das nachlaufende Ende des Kabels 80 aktiviert.

Nach dem Befördern des Kabels am ersten Bandförderer 21(Schritt c)) folgt der Schritt des Überführens der ersten Abwurfbarriere (31a) in eine Inaktivposition (Schritt d, Fig. 5b) und anschliessend bzw. nach Abschluss aller Bearbeitungen des nachlaufenden Kabelendes der Abwurf des Kabels 80 mit der Abwurfeinrichtung 60, vorzugsweise integriert im Schwenkarm für die Kabelbearbeitungsstationen 70 des nachlaufenden Kabelendes (Schritt e)). Damit wird das Kabel zuverlässig abgeworfen, ohne an der Abwurfbarriere hängen zu bleiben.

Das Überführen der ersten Abwurfbarriere (31a) in eine Inaktivposition (Schritt d, Fig. 5b) erfolgt vor der die Bearbeitung des nachlaufenden Endes des Kabels 80 in den dafür vorgesehenen Kabelbearbeitungsstationen 70 (Fig. 1). Die Schritte a) und b) erfolgen bevorzugt parallel bzw. zeitgleich wie die Bearbeitung des vorlaufenden Endes des Kabels 80 in den dafür vorgesehenen Kabelbearbeitungsstationen 71 (Fig. 1). Durch die parallele Ausführung der Schritte wird Taktzeit gespart.

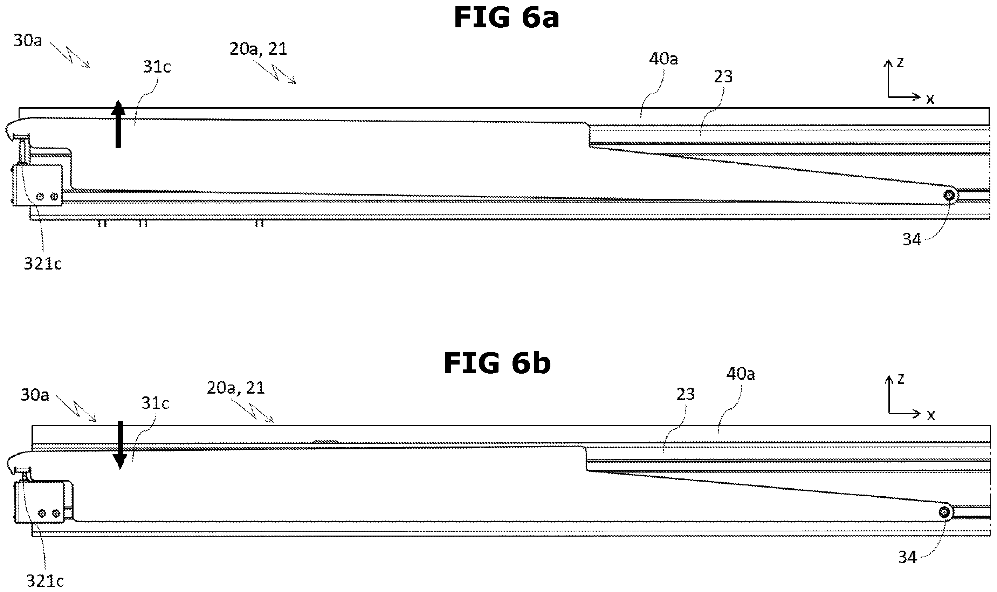

Fig. 6a und Fig. 6b zeigen eine alternative Ausführungsform eines Kabelstaplers 20a mit einer alternativen Abwurfbarriereeinrichtung 30a, in einer detaillierten Seitenansicht (XZ-Ebene), und wiederum einmal mit der Abwurfbarriere 31c in der Aktivposition (oben, Fig. 6a) dargestellt und einmal in der Inaktivposition (unten, Fig. 6b) dargestellt. Die Auffangwanne ist nicht dargestellt.

Die alternative Antriebseinrichtung 32b für die alternative Abwurfbarriereeinrichtung 30a beinhaltet einen einzigen Pneumatikzylinder 321c, welcher die alternative Abwurfbarriere 31c auf der einen Seite bewegt. Auf der anderen Seite ist die alternative Abwurfbarriere 31c drehbar gelagert, beispielsweise mit einem Gleitlager 34. Um eine Überbestimmtheit zu verhindern und damit die Bewegung leichtgängig zu halten, ist im Bereich des Gleitlagers 34 etwas Spiel in X-Richtung vorgesehen, beispielsweise durch ein Langloch (nicht dargestellt) in der Abwurfbarriere 31c. Weiters ist die Befestigung der Abwurfbarriere 31c am Pneumatikzylinder 321c so ausgeführt, dass kleine Drehungen um die Y'-Achse ermöglicht werden, durch elastische Bauweise oder durch Verwendung eines weiteren Drehgelenks (nicht dargestellt).

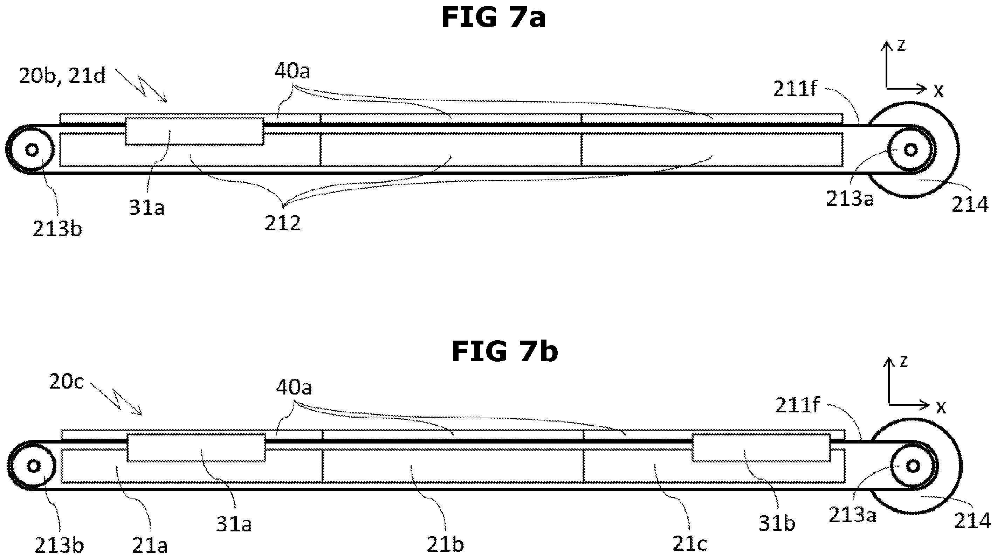

Fig. 7a und Fig. 7b zeigen zwei weitere alternative Ausführungsformen eines Kabelstaplers 20b, 20c in einer schematischen Seitenansicht (XZ-Ebene), hier aufgebaut in modularer Bauweise, einmal mit mehreren Modulrahmen 212 in einem einzigen Bandförderer 21d (Kabelstapler 20b, Fig. 7a) und einmal mit mehreren Bandförderern 21a, 21b, 21c und mehreren Abwurfbarrieren 31a, 31b (Kabelstapler 20c, Fig. 7b).

Der alternative Kabelstapler 20b gemäss Fig. 7a besteht aus nur einem einzigen Bandförderer 21d. Die Struktur dieses Bandförderers 21d ist modular aufgebaut mit drei Modulrahmen 212. Dieser Bandförderer 21d beinhaltet nur ein einzigen Flachbandriemen 211f, mit nur einer einzigen Antriebseinrichtung 214 und zwei Umlenkrollen 213a, 214b und einem dazu gehörenden Spann-System zum Spannen des Flachbandriemens (nicht dargestellt). Auch die Gegenbarrieren 40a sind modular ausgeführt, in denselben Längen wie die jeweiligen Modulrahmen 212.

Der alternative Kabelstapler 20c gemäss Fig. 7b besteht aus drei Bandförderern 21a, 21b, 21c. Alle diese Bandförderer 21a, 21b, 21c verwenden denselben Flachbandriemen 211f, mit nur einer einzigen Antriebseinrichtung 214 und zwei Umlenkrollen 213a, 214b und einem dazu gehörenden Spann-System zum Spannen des Flachbandriemens (nicht dargestellt). Auch die Gegenbarrieren 40a sind modular ausgeführt, in denselben Längen wie die jeweiligen Bandförderer 21a, 21b, 21c. Zusätzlich ist beim Kabelstapler 20c noch eine zweite Abwurfbarriere 31b vorgesehen, mit einer dazu gehörenden Antriebs- und Sensoreinrichtung (nicht dargestellt), welche strukturell und funktionell der ersten Abwurfbarriere 31a entspricht.

Bei beiden zuvor beschriebenen Ausführungsformen ist es auch möglich, zwei oder mehr als zwei Module nebeneinander anzuordnen, um die Länge der Förderbahn zu verlängern.

Fig. 8a und Fig. 8b zeigen zwei weitere alternative Ausführungsformen eines Kabelstaplers 20d, 20e, welche im Wesentlichen funktionell und strukturell wie die zuvor beschriebenen Kabelstapler 20 gemäss den Fig. 1 bis Fig. 5b aufgebaut sind, wobei eine alternativ ausgeführte Gegenbarriere 41a vorhanden ist. Die Fig 8a. zeigt den Kabelstapler 20d mit einem Riemen mit Längsprofil 211w und die Fig 8b zeigt den Kabelstapler 20e mit einem Flachbandriemen 211f und einer Seitenführung 215. Beide Kabelstapler sind nur schematisch in einer Schnittansicht in der YZ-Ebene dargestellt. Diese Ausführungsform ist zumindest auch in Kombination mit den Alternativen bei der Abwurfbarriere (Fig. 6a und Fig. 6b) und/oder in Kombination mit den Varianten beim modularen Aufbau (Fig. 7a und Fig. 7b) einsetzbar.

Beim in Fig. 8a dargestellte Kabelstapler 20d wird im Gegensatz zur Ausführungsform des Kabelstaplers 20 mit Flachbandriemen 211f (Fig. 3) ein Riemen mit Längsprofil 211w verwendet. Die bisher übliche Ausführungsform (Stand der Technik) ist nun mit einer bewegbaren Gegenbarriere 40a ergänzt. Dieser Riemen mit Längsprofil 211w ist zur Gegenbarriere 40a in Y'-Richtung beabstandet, bzw. dort bildet sich der Spalt SY. Im Vergleich zu Flachbandriemen 211f sind derartige Riemen mit Längsprofil 211w um einiges teurer, schwieriger zu beschaffen bei nur wenigen Herstellern, aufwändiger zu montieren und verschleissen schneller.

Der in Fig. 8b dargestellte Kabelstapler 20e stellt jene Ausführungsform dar, in welchem der Riemen mit Längsprofil 211w durch einen Flachbandriemen 211f ersetzt ist, aber die Gegenbarriere 40a weiterhin so ausgestaltet ist wie im alternativen Kabelstapler 20d aus Fig. 8a. Auch hier bildet sich wiederum der Spalt SY in Y'-Richtung, in welchem sich das Kabel 80 (nicht dargestellt) nun verklemmen kann aufgrund der nicht mehr vorhandenen Längsprofil - was zu Störungen führen würde. Um dieses Problem zu verbessern, ist eine Seitenführung 215 vorgesehen.

An den beiden weiteren Ausführungsformen des Kabelstaplers 20d (Fig. 8a) und des Kabelstaplers 20e (Fig. 8b) ist ein Einstellmechanismus 41a für die Gegenbarriere 40a angeordnet. Dieser alternative Einstellmechanismus 41a unterscheidet sich dadurch vom Einstellmechanismus 41 der Ausführungsform des Kabelstaplers 20 gemäss Fig. 3, dass er eine Verschiebung der Gegenbarriere 40a in Y'-Richtung ermöglicht und somit einen Spalt SY zwischen der Riemenstirnfläche 2112 und der Gegenbarriere 40a erzeugt, wohingegen der Einstellmechanismus 41 in der Ausführungsform des Kabelstaplers 20 eine Verschiebung der Gegenbarriere 40 in Z'-Richtung ermöglicht und somit einen Spalt SZ zwischen der Riementransportfläche 2111 und der Gegenbarriere 40 erzeugt.

Fig. 9a bis Fig. 9c zeigen einen Kabelstapler 20f, welcher keine Abwurfbarriere umfasst (somit nicht Teil der vorliegenden Erfindung), jedoch im Wesentlichen dieselben funktionellen und strukturellen Elemente wie der Kabelstapler gemäss den Fig, 1 bis 5b aufweist, in einer Schnittansicht in der YZ-Ebene, mit der Schnittebene definiert durch die Position einer Schraube 411 des Einstellmechanismus 41. Weiters gezeigt sind die Elemente des Einstellmechanismus 41 sowie das Verfahren zum Einstellen des gewünschten Spalts SZ.

Der Hauptkörper des Einstellmechanismus 41 ist verbunden mit der Gegenbarriere 40 und umfasst zumindest ein Langloch 413, welches eine Einstellung/Verschiebung in Z'-Richtung ermöglicht. Mithilfe zumindest einer Schraube 411 und einer Unterlegscheibe 412 als Befestigungseinrichtung ist der Einstellmechanismus 41 im Bereich dieses Langlochs 413 mit dem Hauptrahmen 23 des Kabelstaplers 20f verbunden. Die Unterlegscheibe 412 ist hierbei so ausgestaltet, dass sich die Schraube 411 bei Vibrationen nicht lockert, beispielsweise als Rippenscheibe oder als Keilsicherungsscheibe (Nord-Lock). Pro Einstellmechanismus 41 sind mehrere Schrauben 411, Unterlegscheiben 412 und Langlöcher 413 vorgesehen (in dieser Schnittansicht ist nur je eine sichtbar). Werden alle Schrauben 411 vom Benutzer leicht gelockert (Fig. 9a), dann ist der Einstellmechanismus 41 und die daran befestigte Gegenbarriere 40 frei bewegbar in Z'-Richtung, beispielsweise durch einen Benutzer. Sobald die Schrauben 411 festgezogen sind (Fig. 9a, Fig. 9b) ist die Gegenbarriere 40 relativ zum Hauptrahmen 23 und den restlichen Elementen des Kabelstaplers 20f fixiert und eindeutig positioniert.

Um den gewünschten Spalt SZ zwischen der Riementransportfläche 2111 des Flachbandriemen 211f und der Gegenfläche 40 einzustellen umfasst der Einstellmechanismus 41 eine Einstellhilfe 414. Hierzu werden zunächst alle Schrauben 411 leicht gelockert und der Einstellmechanismus 41 mit der Gegenbarriere 40 so verschoben, dass der Spalt zwischen Flachbandriemen 211f und Gegenbarriere 40 maximal wird. In diesen Spalt wird die Einstellhilfe 414 geschoben (Fig. 9a), vorzugsweise per Hand vom Benutzer. Anschliessend wird die Gegenbarriere 40 wieder in die entgegengesetzte Richtung geschoben (Pfeil in Z'-Richtung), bis zum Anschlag, d.h. bis sich Gegenbarriere 40, Einstellhilfe 414 und Flachbandriemen 211f jeweils gegenseitig berühren. Im Anschluss daran werden alle Schrauben 411 wieder festgezogen (Pfeil in Y'-Richtung).

Die Position mit der Einstellhilfe 414 noch in Position aber den Schrauben 411 bereits festgezogen ist dargestellt in Fig. 9b. Vor der Inbetriebnahme wird nun noch die Einstellhilfe 414 herausgezogen bzw. entfernt (Pfeil in Y'-Richtung).

Die Position mit der entfernten Einstellhilfe 414 ist dargestellt in Fig. 9c. Zwischen der Riementransportfläche 2111 des Flachbandriemens 211f und der Gegenbarriere 40 bildet sich der Spalt SZ. Dieser entspricht ungefähr der Dicke der Einstellhilfe 414 und ist unabhängig von der Dicke des Flachbandriemens 211f. Somit kann jederzeit und mit wenig Aufwand ein reproduzierbarer Spalt SZ in optimaler Grösse für Flachbandriemen 211f verschiedener Hersteller erzeugt werden. Bei starker Abnutzung des Flachbandriemens 211f (Dicken-Reduktion durch Verschleiss/Abrieb) kann der Einstell-Prozess auch mehrmals beim selben Flachbandriemen 211f wiederholt werden.

In einer weiteren, alternativen Ausführungsform eines zuvor beschriebenen Kabelstaplers ist zusätzlich eine Sensoreinrichtung vorhanden, mit welcher der Spalt zwischen einem Riemen und der Gegenbarriere erkennbar ist (nicht dargestellt). Die Sensoreinrichtung umfasst einen Abstandssensor zum Detektieren des Abstands zwischen dem Riemen und der ersten Gegenbarriere und sendet die Sensordaten an die Steuerungseinrichtung. Die Steuereinrichtung umfasst eine Recheneinheit und ist mit einer Datenbank zum Austausch von Steuerdaten verbunden. Die Steuerdaten umfassen Steuerbefehle zum Steuern der Antriebseinrichtung der Gegenbarriere und/oder Steuerbefehle zum Steuern der Förderrollen des Bandförderers. Die Recheneinheit weist ein Programm auf, welches geeignet ist, um die Sensordaten auszuwerten und eine Spaltbreite zu berechnen und mit einem Referenzwert zu vergleichen. Beispielsweise umfasst die Sensoreinrichtung einen bildgebenden Sensor, wie eine Kamera.

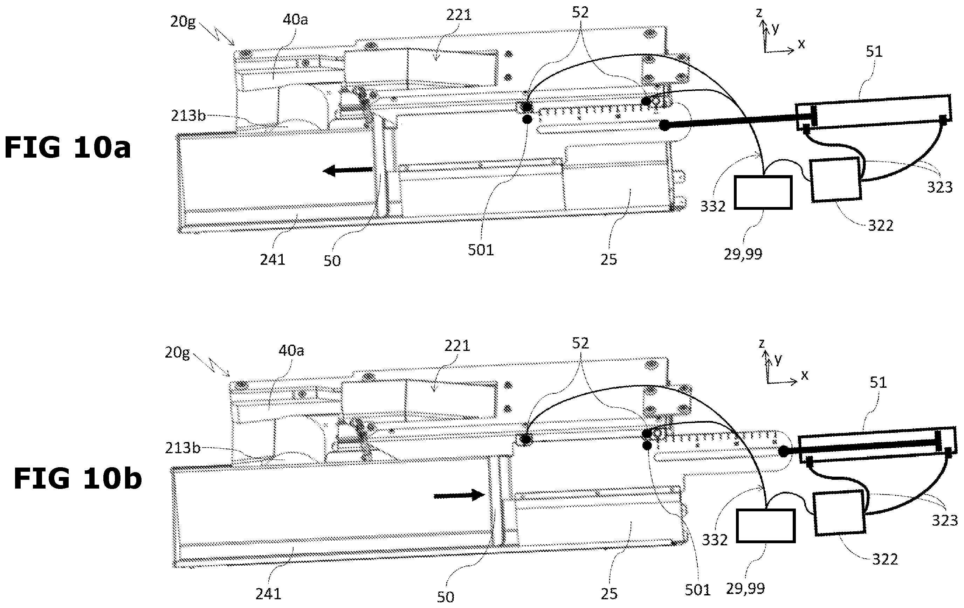

Fig. 10 (a-b) zeigt eine weitere Ausführungsform eines Kabelstaplers 20g mit einem aktiv bewegbaren Leitelement 50, welches an der Schutzabdeckung 25 angeordnet ist. Dieses Leitelement 50 ist hier ausgeführt als Schiebeblech und dient dazu, beim Abwurf des Kabels 80 (nicht dargestellt) dessen Führung im Eingangsbahnabschnitt 221 zu verbessern und so für eine optimale Ablagequalität zu sorgen. Die optimale Position dieses Leitelements 50 ist hierbei abhängig von der Kabellänge als Kabelparameter. Deshalb ist das Leitelements 50 so ausgestaltet, dass es in X-Richtung verschoben werden kann (dargestellt durch den dicken Pfeil). In Fig. 10a ist das Leitelement 50 in der ersten Position dargestellt, bei dem das erste Leitelement nahe an der ersten Umlenkrolle 213b positioniert ist und in Fig. 10b in der anderen Position, weiter entfernt von an der ersten Umlenkrolle 213b positioniert ist.

Damit der Benutzer diese Verschiebung nicht vergisst, ist es vorteilhaft, die Position des Leitelements 50 bzw. eines daran angeordneten Detektionselements 501 (beispielsweise ein Magnet) mithilfe einer Sensoreinrichtung 52 zu detektieren und/oder die Bewegung des Leitelements 50 aktiv anzutreiben mithilfe einer Antriebseinrichtung 51, beides elektrisch verbunden mit der Steuerungseinrichtung 29, 99 des Kabelstaplers 20 oder der Kabelbearbeitungsvorrichtung 90. Alternativ dazu kann das Detektionselement in der Antriebseinrichtung integriert sein, bevorzugt im Zylinderkolben des Pneumatikzylinders.

In einer ergänzenden Ausführung (nicht dargestellt) ist diese Antriebseinrichtung 51 als elektrische Antriebsachse ausgeführt und die Sensoreinrichtung 52 als Drehgeber oder Absolutwertgeber. Somit kann die Position des Leitelements 50 aktiv verstellt werden, und zwar stufenlos bzw. mit beliebig vielen Positionen.

In einer weiteren Ausführungsform (nicht dargestellt) wird auf eine Antriebseinrichtung verzichtet und die Sensoreinrichtung besteht aus zumindest einem binären Sensor, für eine Position des ersten Leitelements. Stimmt diese Position nicht mit der aktuellen verarbeiteten Kabellänge überein, stoppt der Kabelstapler bzw. dessen Antriebseinrichtungen oder die Kabelbearbeitungsvorrichtung bzw. dessen Antriebseinrichtungen und weist den Benutzer darauf hin, dass das Leitelement an die korrekte Position verschoben werden muss.

In einer erweiterten Ausführungsform (nicht dargestellt) sind mehrere Sensoren verbaut oder ein Absolutwertgeber, wobei weiterhin auf eine Antriebseinrichtung verzichtet werden kann.

In den Fig. 10a bzw. 10b ist eine Ausführungsform schematisch eingezeichnet, welche zwei Positionen anfahren kann, die aktiv antreibbar ist. Die Antriebseinrichtung 51 ist als Pneumatikzylinder ausgeführt, welche über Schläuche 323 mit derselben Ventilbatterie 322 verbunden sind wie die meisten anderen Pneumatikzylinder dieses Kabelstaplers 20g. Die Sensoreinrichtung 52 besteht aus zwei binären Sensoren bzw. Endschaltern, welche so angeordnet sind, dass sie an den jeweiligen Endpositionen ein Signal senden. Hier dargestellt ist eine Anordnung im Bereich des Leitelements 50.

Alternativ dazu kann die Sensoreinrichtung 52 auch im Bereich des Pneumatikzylinders integriert sein, wie gezeichnet in Fig. 3 für die Antriebseinrichtung 32a. Auch hier ist die Ventilbatterie 322 und die Sensoreinrichtung 52 über Steuerkabel 332 mit der Steuereinrichtung 29, 99 (nicht dargestellt) elektrisch verbunden.

Alternativ zur Integration des Leitelements 50 in die Schutzabdeckung 25 kann diese auch an einem anderen Element des Kabelstaplers befestigt sein. Weiters möglich ist die Verwendung mehrerer Leitelemente pro Kabelstapler.

Das Verfahren zum sicheren Befördern eines Kabels 80 am Kabelstapler, welches nicht Teil der vorliegenden Erfindung ist, wird am Beispiel des Kabelstaplers 20g gemäss den Fig. 10a und 10b dargestellt umfasst zumindest die folgenden Schritte:
a) Überführen des ersten Leitelements 50 in eine erste Position, wobei die erste Position mit der Kabellänge des zu befördernden Kabels 80 abgestimmt ist;
b) Überprüfen der ersten Position des ersten Leitelements 50 mithilfe der Sensoreinrichtung 52;
c) Übergabe von Steuerdaten an die Steuerungseinrichtung 29,99;
d) Befördern des Kabels am ersten Bandförderer.

Vor dem Schritt a) kann ein Auswählen zumindest eines Kabelparameters des Kabels erfolgen, beispielsweise von einer Datenbank, welche in der Steuerungseinrichtung 29, 99 abgelegt ist. Die Steuereinrichtung 29 oder die Zentralsteuerung 99 sind mit der Datenbank zum Austausch von Kabelparametern verbunden. Das Überführen des ersten Leitelements 50 in die erste Position (Schritt a) erfolgt mithilfe der Antriebseinrichtung 51.

### Bezugszeichenliste

- 20, 20a-g: Kabelstapler
- 21, 21a-d: Bandförderer
- 211: Riemen
- 211f: Flachbandriemen
- 2111: Riementransportfläche
- 2112: Riemenstirnfläche
- 211w: Riemen mit Längsprofil (Riemenwulst)
- 212: Modulrahmen
- 213, 213a-b: Umlenkrolle (Förderrolle)
- 214: Antriebseinrichtung (Elektromotor)
- 215: Seitenführung
- 22: Förderbahn
- 221: Eingangsbahnabschnitt
- 222: Ausgangsbahnabschnitt
- 23: (Haupt-)Rahmen
- 231, 231a-b: Führungsvorsätze
- 24: Auffangbereich
- 241: Auffangwanne (Kippwanne)
- 242: Antrieb (für 241)
- 25: Schutzabdeckung
- 29: Steuerungseinrichtung

- 30, 30a: Abwurfbarriereeinrichtung

- 31: Abwurfbarrieren

- 31a-c: Abwurfbarrieren
- 311, 311a-c: Führungsnuten
- 32 , 32a-b: Antriebseinrichtung
- 321, 321a-c: Pneumatikzylinder

- 322: Ventil(-Batterie)
- 323: Schlauch/Schläuche
- 33: Sensoreinrichtung
- 331: Sensor(en) (für 31)
- 332: Steuerkabel
- 34: Gleitlager
- 35: Fixiereinrichtung

- 40, 40a: Gegenbarriere
- 41, 41a: Einstellmechanismus

- 411: Schraube
- 412: Unterlegscheibe
- 413: Langloch
- 414: Einstellhilfe

- 50: (erstes) Leitelement (Leitblech)
- 501: Detektionselement (Detektionsfläche)
- 51: Antriebseinrichtung (für 50)
- 52: Sensoreinrichtung (für 50)

- 60: Abwurfeinrichtung (Schwenkarm)
- 61: Hauptschwenker (Schwenkarm)

- 70: Kabelbearbeitungsstation(en)
- 71: Kabelbearbeitungsstation(en)

- 80: (bearbeitetes) Kabel

- 90: Kabelbearbeitungsvorrichtung
- 99: Zentralsteuerung
- A: Schnittebene
- α: Verkippung(s-Winkel)
- SY, SZ: Spalt
- X: (Förder-)Richtung für 80
- Y: Richtung (horizontal, quer zu X)
- Y': Richtung (parallel zum Riemen, quer zu X)
- Z: Richtung (vertikal)
- Z': Richtung (orthogonal zum Riemen, quer zu X)

## Patentansprüche

1. Kabelstapler (20) mit einem ersten Bandförderer (21a) zum Befördern des Kabels (80) entlang einer Förderrichtung (X), wobei der erste Bandförderer (21a) zum Aufnehmen eines Riemens (211) geeignet ist und der erste Bandförderer (21a) eine Förderbahn (22) mit einem Eingangsbahnabschnitt (221) und einem Ausgangsbahnabschnitt (222) aufweist, sowie ein Hauptrahmen (23) vorhanden ist, an dem der erste Bandförderer (21a) angeordnet ist, wobei eine Gegenbarriere (40a) zum Führen des Kabels (80) vorhanden ist **dadurch gekennzeichnet, dass** der erste Bandförderer (21a) im Bereich des Eingangsbahnabschnitts (221) eine erste Abwurfbarriere (31a) zum Verhindern eines ungesteuerten Abgleitens des Kabels (80) von der Förderbahn (22) aufweist, wobei die erste Abwurfbarriere (31a) relativ zur Gegenbarriere (40; 40a) zumindest von einer Aktivposition in eine Inaktivposition bewegbar ist.

2. Kabelstapler (20) nach Anspruch 1, **dadurch gekennzeichnet, dass** die erste Abwurfbarriere (31a) orthogonal zur Förderrichtung (X) von der Aktivposition in die Inaktivposition bewegbar ist, und/oder entlang der Förderrichtung (X) der Förderbahn (22) bewegbar ist.

3. Kabelstapler (20) nach Anspruch 1 oder 2, **dadurch gekennzeichnet, dass** die erste Abwurfbarriere (31a) mit einer Antriebseinrichtung (32a) mit zumindest einem Antrieb zum Bewegen der ersten Abwurfbarriere (31a) mechanisch verbunden ist, wobei diese Antriebseinrichtung (32a) bevorzugt eine pneumatische Antriebseinrichtung ist, welche als Antrieb zumindest einen Pneumatikzylinder (321a, 321b, 321c) und bevorzugt ein Ventil (322) aufweist.

4. Kabelstapler (20) nach einem der Ansprüche 1 bis 3, **dadurch gekennzeichnet, dass** eine Sensoreinrichtung (33) vorhanden ist, mit der zumindest die Inaktivposition und/oder die Aktivposition der ersten Abwurfbarriere (31a) detektierbar ist.

5. Kabelstapler (20) nach einem der vorgenannten Ansprüche, **dadurch gekennzeichnet, dass** die Gegenbarriere (40a) bewegbar am ersten Bandförderer (21a) angeordnet ist.

6. Kabelstapler (20) nach einem der vorgenannten Ansprüche, **dadurch gekennzeichnet, dass** der erste Bandförderer (21a) relativ zur Horizontalen verkippt am Hauptrahmen (23) angeordnet ist, wobei die Verkippung (α) insbesondere zwischen 1 Grad und 15 Grad ist und die Verkippung (α) bevorzugt 6 Grad beträgt.

7. Kabelstapler (20) nach einem der vorgenannten Ansprüche, **dadurch gekennzeichnet, dass** ein Auffangbereich (24) zum Auffangen der Kabel (80) vorhanden ist, wobei die erste Abwurfbarriere (31a) benachbart zum Auffangbereich (24) angeordnet ist und der Auffangbereich (24) bevorzugt als bewegbare Auffangwanne (241) ausgeführt ist.

8. Kabelstapler (20) nach einem der vorgenannten Ansprüche, **dadurch gekennzeichnet, dass** zumindest eine Fixiereinrichtung (35) zum Fixieren zumindest der ersten Abwurfbarriere (31a) in der Aktivposition vorhanden ist.

9. Kabelstapler (20) nach einem der vorgenannten Ansprüche, **dadurch gekennzeichnet, dass** der erste Bandförderer (21a) mehrere Modulrahmen (212) umfasst, welche mit dem Hauptrahmen (23) verbindbar sind, wobei die Modulrahmen (212) insbesondere voneinander und/oder vom Hauptrahmen (23) separierbar sind.

10. Kabelstapler (20) nach Anspruch 1, **dadurch gekennzeichnet, dass** weiter zumindest ein Leitelement (50) zur verbesserten Führung des Kabels im Eingangsbahnabschnitt (221) vorhanden ist, und im Bereich des Leitelements (50) eine Sensoreinrichtung (52) mit zumindest einem Sensor zum Bestimmen einer ersten Position des Leitelements (50) vorhanden ist, wobei die Sensoreinrichtung (52) mit einer Steuerungseinrichtung (29, 99) oder mit einer Zentralsteuerung (99) einer
Kabelbearbeitungsvorrichtung (90) elektrisch verbunden ist und/oder eine Antriebseinrichtung (51) für die Bewegung des Leitelements (50) mit dem erste Leitelement (50) verbunden ist.

11. Kabelstapler (20) nach Anspruch 1, **dadurch gekennzeichnet, dass** die Gegenbarriere (40a) relativ zur Förderrichtung (X) bewegbar ist, um einen Spalt (SY, SZ) zu der Förderbahn des ersten Bandförderers (21a) einzustellen.

12. Kabelstapler (20) nach Anspruch 11, **dadurch gekennzeichnet, dass** die Gegenbarriere normal zur Förderrichtung bewegbar ist, um insbesondere einen horizontalen Spalt (SZ) zwischen dem ersten Bandförderer (21a) und der Gegenbarriere (40a) vertikal einzustellen.

13. Kabelbearbeitungsvorrichtung (90) mit zumindest einer Kabelbearbeitungsstation (70, 71) mit zumindest einem Kabelbearbeitungswerkzeug zum Bearbeiten des Kabels (80) sowie einem Kabelstapler (20) nach einem der Ansprüche 1 bis 12 und mit zumindest einer Abwurfeinrichtung (60) zum Abwerfen des Kabels (80) vom zumindest einen der Bandförderer (21a, 21b, 21c), der an der Kabelbearbeitungsvorrichtung (90) oder an dem Kabelstapler (20) angeordnet ist, welche bevorzugt mit einer Steuerungseinrichtung (29) des Kabelstaplers (20) zum Austausch von Steuerdaten verbunden ist oder der Kabelstapler (20) mit einer Zentralsteuerung (99) der Kabelbearbeitungsvorrichtung (90) zum Austausch von Steuerdaten elektrisch verbunden ist.

14. Verfahren zum sicheren Befördern eines Kabels (80) an einem Kabelstapler (20) nach einem der Ansprüche 1 bis 12, insbesondere an einem Kabelstapler (20) als Teil einer Kabelbearbeitungsvorrichtung (90) nach Anspruch 13, wobei das Verfahren die folgenden Schritte umfasst:
a) Auswählen zumindest eines Kabelparameters, wobei bevorzugt der zumindest eine Kabelparameter von einer Datenbank abgerufen wird;
b) Überführen der ersten Abwurfbarriere (31a) relativ zu der Gegenbarriere (40) in die Aktivposition;
c) Befördern des Kabels (80) am ersten Bandförderer (21a).

15. Verfahren nach Anspruch 14, **dadurch gekennzeichnet, dass** nach dem Schritt c) zumindest einer der Schritte erfolgt:
d) Überführen der ersten Abwurfbarriere (31a) in eine Inaktivposition;
e) Abwurf des Kabels (80) mit der Abwurfeinrichtung (60).

## Claims

1. Cable stacker (20) with a first belt conveyor (21a) for conveying the cable (80) along a conveying direction (X), wherein the first belt conveyor (21a) is suitable for receiving a belt (211) and the first belt conveyor (21a) has a conveyor path (22) with an input path section (221) and an output path portion (222), and a main frame (23) is present on which the first belt conveyor (21a) is arranged, wherein a counter-barrier (40a) for guiding the cable (80) is present, **characterized in that** the first belt conveyor (21a) has a first drop barrier (31a) in the area of the input path section (221) for preventing an uncontrolled sliding off of the cable (80) from the conveyor path (22), wherein the first drop barrier (31a) is movable relative to the counter-barrier (40; 40a) at least from an active position into an inactive position.

2. Cable stacker (20) according to claim 1, **characterized in that** the first drop barrier (31a) is movable orthogonally to the conveying direction (X) from the active position into the inactive position, and/or is movable along the conveying direction (X) of the conveyor path (22).

3. Cable stacker (20) according to claim 1 or 2, **characterized in that** the first drop barrier (31a) is mechanically connected to a drive device (32a) with at least one drive for moving the first drop barrier (31a), wherein this drive device (32a) is preferably a pneumatic drive device which has at least one pneumatic cylinder (321a, 321b, 321c) and preferably a valve (322) as the drive.

4. Cable stacker (20) according to one of claims 1 to 3, **characterized in that** a sensor device (33) is present, with which at least the inactive position and/or the active position of the first drop barrier (31a) is detectable.

5. Cable stacker (20) according to one of the preceding claims, **characterized in that** the counter-barrier (40a) is movably arranged on the first belt conveyor (21a).

6. Cable stacker (20) according to one of the preceding claims, **characterized in that** the first belt conveyor (21a) is arranged tilted relative to the horizontal on the main frame (23), wherein the tilt (α) is in particular between 1 degree and 15 degrees and the tilt (α) is preferably 6 degrees.

7. Cable stacker (20) according to one of the preceding claims, **characterized in that** a collecting area (24) for collecting the cables (80) is present, wherein the first drop barrier (31a) is arranged adjacent to the collecting area (24) and the collecting area (24) is preferably designed as a movable collecting through (241).

8. Cable stacker (20) according to one of the preceding claims, **characterized in that** at least one fixing device (35) is present for fixing at least the first drop barrier (31a) in the active position.

9. Cable stacker (20) according to one of the preceding claims, **characterized in that** the first belt conveyor (21a) comprises a plurality of module frames (212) which are connectable to the main frame (23), wherein the module frames (212) are in particular separable from each other and/or from the main frame (23).

10. Cable stacker (20) according to claim 1, **characterized in that** further at least one guide element (50) is present for improved guiding of the cable in the input path section (221), and a sensor device (52) with at least one sensor for determining a first position of the guide element (50) is present in the area of the guide element (50), wherein the sensor device (52) is electrically connected to a control device (29, 99) or to a central controller (99) of a cable processing apparatus (90) and/or a drive device (51) for the movement of the guide element (50) is connected to the first guide element (50).

11. Cable stacker (20) according to claim 1, **characterized in that** the counter-barrier (40a) is movable relative to the conveying direction (X) in order to set a gap (SY, SZ) to the conveyor path of the first belt conveyor (21a).

12. Cable stacker (20) according to claim 11, **characterized in that** the counter-barrier is movable normal to the conveying direction, in particular to vertically set a horizontal gap (SZ) between the first belt conveyor (21a) and the counter-barrier (40a).

13. Cable processing apparatus (90) with at least one cable processing station (70, 71) with at least one cable processing tool for processing the cable (80) as well as a cable stacker (20) according to one of claims 1 to 12, and with at least one dropping device (60) for ejecting the cable (80) from the at least one of the belt conveyors (21a, 21b, 21c), which is arranged on the cable processing apparatus (90) or on the cable stacker (20), which is preferably connected to a control device (29) of the cable stacker (20) for exchanging control data or the cable stacker (20) is electrically connected to a central controller (99) of the cable processing apparatus (90) for exchanging control data.

14. Method for the safe conveying of a cable (80) on a cable stacker (20) according to one of claims 1 to 12, in particular on a cable stacker (20) as part of a cable processing apparatus (90) according to claim 13, wherein the method comprises the following steps:
a) Selecting at least one cable parameter, wherein the at least one cable parameter is preferably retrieved from a database;
b) Transferring the first drop barrier (31a) relative to the counter-barrier (40) into the active position;
c) Conveying the cable (80) on the first belt conveyor (21a).

15. Method according to claim 14, **characterized in that** after step c) at least one of the steps occurs:
d) Transferring the first drop barrier (31a) into an inactive position;
e) Ejection of the cable (80) with the dropping device (60).

## Revendications

1. Empileur de câbles (20) comprenant un premier convoyeur à bande (21a) destiné à transporter le câble (80) le long d'une direction de transport (X), le premier convoyeur à bande (21a) étant adapté pour recevoir une courroie (211) et le premier convoyeur à bande (21a) comportant une voie de transport (22) avec une section de voie d'entrée (221) et une section de voie de sortie (222), ainsi qu'un châssis principal (23) sur lequel est disposé le premier convoyeur à bande (21a), une contre-barrière (40a) étant prévue pour guider le câble (80),
**caractérisé en ce que** le premier convoyeur à bande (21a) comporte, au niveau de la section de voie d'entrée (221), une première barrière anti-éjection (31a) destinée à empêcher un glissement incontrôlé du câble (80) hors de la voie de transport (22), la première barrière anti-éjection (31a) étant mobile par rapport à la contre-barrière (40 ; 40a) au moins d'une position active vers une position inactive.

2. Empileur de câbles (20) selon la revendication 1,
**caractérisé en ce que** la première barrière anti-éjection (31a) est mobile orthogonalement à la direction de transport (X) de la position active vers la position inactive, et/ou est mobile le long de la direction de transport (X) de la voie de transport (22).

3. Empileur de câbles (20) selon la revendication 1 ou 2,
**caractérisé en ce que** la première barrière anti-éjection (31a) est reliée mécaniquement à un dispositif d'entraînement (32a) comportant au moins un élément d'entraînement destiné à déplacer la première barrière anti-éjection (31a), ce dispositif d'entraînement (32a) étant de préférence un dispositif d'entraînement pneumatique qui comprend, comme élément d'entraînement, au moins un vérin pneumatique (321a, 321b, 321c) et, de préférence, une soupape (322).

4. Empileur de câbles (20) selon l'une des revendications 1 à 3, **caractérisé en ce qu'**il comporte un dispositif de détection (33) permettant de détecter au moins la position inactive et/ou la position active de la première barrière anti-éjection (31a).

5. Empileur de câbles (20) selon l'une des revendications précédentes, **caractérisé en ce que** la contre-barrière (40a) est disposée de manière mobile sur le premier convoyeur à bande (21a).

6. Empileur de câbles (20) selon l'une des revendications précédentes, **caractérisé en ce que** le premier convoyeur à bande (21a) est disposé sur le châssis principal (23) en étant incliné par rapport à l'horizontale, l'inclinaison (α) étant notamment comprise entre 1 degré et 15 degrés et l'inclinaison (α) étant de préférence de 6 degrés.

7. Empileur de câbles (20) selon l'une des revendications précédentes, **caractérisé en ce qu'**il comporte une zone de collecte (24) destinée à collecter les câbles (80), la première barrière anti-éjection (31a) étant disposée à proximité de la zone de collecte (24), et la zone de collecte (24) étant de préférence réalisée sous la forme d'un bac de collecte mobile (241).

8. Empileur de câbles (20) selon l'une des revendications précédentes, **caractérisé en ce qu'**il comporte au moins un dispositif de fixation (35) destiné à fixer au moins la première barrière anti-éjection (31a) dans la position active.

9. Empileur de câbles (20) selon l'une des revendications précédentes, **caractérisé en ce que** le premier convoyeur à bande (21a) comprend plusieurs châssis modulaires (212) pouvant être reliés au châssis principal (23), les châssis modulaires (212) pouvant notamment être séparés les uns des autres et/ou du châssis principal (23).

10. Empileur de câbles (20) selon la revendication 1,
**caractérisé en ce qu'**il comporte en outre au moins un élément de guidage (50) destiné à améliorer le guidage du câble dans la section de voie d'entrée (221), et **en ce qu'**un dispositif de détection (52) comportant au moins un capteur destiné à déterminer une première position de l'élément de guidage (50) est prévu au niveau de l'élément de guidage (50), le dispositif de détection (52) étant relié électriquement à un dispositif de commande (29, 99) ou à une commande centrale (99) d'un dispositif de traitement de câbles (90), et/ou un dispositif d'entraînement (51) destiné à déplacer l'élément de guidage (50) étant relié au premier élément de guidage (50).

11. Empileur de câbles (20) selon la revendication 1,
**caractérisé en ce que** la contre-barrière (40a) est mobile par rapport à la direction de transport (X) afin de régler un interstice (SY, SZ) par rapport à la voie de transport du premier convoyeur à bande (21a).

12. Empileur de câbles (20) selon la revendication 11,
**caractérisé en ce que** la contre-barrière est mobile perpendiculairement à la direction de transport, afin notamment de régler verticalement un interstice horizontal (SZ) entre le premier convoyeur à bande (21a) et la contre-barrière (40a).

13. Dispositif de traitement de câbles (90) comprenant au moins un poste de traitement de câbles (70, 71) pourvu d'au moins un outil de traitement de câble destiné à traiter le câble (80), ainsi qu'un empileur de câbles (20) selon l'une des revendications 1 à 12, et comprenant au moins un dispositif d'éjection (60) qui est destiné à éjecter le câble (80) depuis l'un au moins des convoyeurs à bande (21a, 21b, 21c), disposé sur le dispositif de traitement de câbles (90) ou sur l'empileur de câbles (20), et qui est de préférence relié à un dispositif de commande (29) de l'empileur de câbles (20) en vue de l'échange de données de commande, ou bien l'empileur de câbles (20) est relié électriquement à une commande centrale (99) du dispositif de traitement de câbles (90) en vue de l'échange de données de commande.

14. Procédé pour le transport en toute sécurité d'un câble (80) sur un empileur de câbles (20) selon l'une des revendications 1 à 12, en particulier sur un empileur de câbles (20) faisant partie d'un dispositif de traitement de câbles (90) selon la revendication 13, le procédé comprenant les étapes suivantes consistant à :
a) sélectionner au moins un paramètre de câble, ledit au moins un paramètre de câble étant de préférence extrait d'une base de données ;
b) transférer la première barrière anti-éjection (31a) par rapport à la contre-barrière (40) vers la position active ;
c) transporter le câble (80) sur le premier convoyeur à bande (21a).

15. Procédé selon la revendication 14,
**caractérisé en ce que** l'étape c) est suivie d'au moins l'une des étapes consistant à :
d) transférer la première barrière anti-éjection (31a) vers une position inactive ;
e) éjecter le câble (80) à l'aide du dispositif d'éjection (60).
